(19) Europäisches Patentamt
European Patent Office
Office européen des brevets

(11) **EP 2 498 112 A1**

(12) **EUROPEAN PATENT APPLICATION**
published in accordance with Art. 153(4) EPC

(43) Date of publication:
**12.09.2012 Bulletin 2012/37**

(51) Int Cl.:
*G02B 7/04* *(2006.01)*   *G02B 7/02* *(2006.01)*
*H04N 5/225* *(2006.01)*

(21) Application number: **10828064.5**

(22) Date of filing: **21.10.2010**

(86) International application number:
**PCT/JP2010/006244**

(87) International publication number:
**WO 2011/055503 (12.05.2011 Gazette 2011/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2009 JP 2009252791**

(71) Applicant: **Konica Minolta Advanced Layers, Inc.
Hachioji-shi
Tokyo 192-8505 (JP)**

(72) Inventors:
• **KONISHI, Hirotoshi
Hachioji-shi
Tokyo 192-8505 (JP)**

• **ONISHI, Satoshi
Hachioji-shi
Tokyo 192-8505 (JP)**
• **MORITA, Mitsuhiko
Hachioji-shi
Tokyo 192-8505 (JP)**

(74) Representative: **HOFFMANN EITLE
Patent- und Rechtsanwälte
Arabellastrasse 4
81925 München (DE)**

(54) **IMAGE PICKUP DEVICE, METHOD FOR MANUFACTURING IMAGE PICKUP DEVICE, AND JIG FOR ADJUSTING IMAGE PICKUP DEVICE**

(57)   In an image pickup device 1 and a method for manufacturing same according to the present invention, one end of a rod 42 in an ultrasonic linear actuator 4 is supported tiltably by a first supporting section (for example, a front frame 52), and after the position of the ultrasonic linear actuator 4 is adjusted in such a manner that an optical axis of a moving lens group (for example, a first unit 2) which engages with the rod 42 is perpendicular to an element surface of an image pickup element 7, a piezoelectric element 41 which is connected to another end of the rod 42 is fixed by adhesive to a second supporting section (for example, a rear frame 51) which is disposed in the vicinity of the piezoelectric element 41. The adjusting jig according to the present invention includes: a first jig which is used for the positional adjustment and abuts against a reference surface of the image pickup element 7; a second jig which abuts against a reference surface of a holding member which holds the moving lens group, the reference surface being perpendicular to the optical axis of the moving lens group; and an adhesive filling unit for ejecting adhesive. According to this composition, it is possible to improve the tilt accuracy of the moving lens group independently of the component accuracy, as well as being able to achieve height reduction.

FIG.1

EP 2 498 112 A1

**Description**

Technical Field

The present invention relates to a small-scale image pickup device which is suitable for use in an image pickup device of a portable telephone or the like, and more particularly to an image pickup device which uses an ultrasonic linear actuator formed of an SIDM (Smooth Impact Drive Mechanism (registered trademark)) as a drive mechanism for realizing the function such as auto-focusing or zooming. The present invention also relates to a method for manufacturing such an image pickup device while adjusting the tilt of a lens unit, and to an adjusting jig which is used in the adjustment.

Background Art

A small lens unit for an image pickup device of a portable telephone, or the like, has been developed, which employs the ultrasonic linear actuator described above as a drive mechanism. This ultrasonic linear actuator transmits the expansion and contraction of a piezoelectric element to a rod, and causes a moving lens group, which is engaged with the rod by a prescribed frictional force, to move by using the velocity difference of the piezoelectric element when expanding and when contracting. In an ultrasonic linear actuator of this kind, when the rod expands slowly, for example, the moving lens group which is engaged by friction with the rod also moves, whereas if the rod is contracted instantaneously so as to exceed the prescribed frictional force, then the moving lens group is left in the expanded position. By repeating expansion and contraction of the rod in this way, the ultrasonic linear actuator is able to move the moving lens group in the axial direction of the rod. By situating the rod of an ultrasonic linear actuator of this kind in the optical axis direction of the lens and engaging a holding member of the lens group that is to be moved, with the rod, autofocus and zoom functions, and the like, become possible.

If there is an tilt in the installation of the rod on the frame member, in particular, in a ultrasonic linear actuator of this kind, deviation in the optical occurs in accordance with the movement of the moving lens group. Therefore, in Patent Document 1 which was proposed previously by the present applicants, two supporting plates which are separated by an interval in the front/rear direction are formed in an integrated fashion on one part of a frame which is divided into front and rear parts, and the vicinity of either end of the rod is held by friction respectively in expandable and contractable fashion, by bearing holes formed in the supporting plates.

In recent years, folding-type portable telephones have come to have a small thickness of less than 10 mm in each leaf of the phone, and a camera unit mounted therein has been required to have a low height of about 5 to 6 mm. Therefore, in the current circumstances, even a 0.1 mm reduction in height provides added value in an image pickup device.

As reduction of the height of the image pickup device of this kind advances, the interval between the two supporting plates in the prior technology described above is reduced, and it becomes difficult to achieve tilt accuracy between the axis linking the two bearing holes described above (the rod axis line) and the reference surface of the image pickup element. Furthermore, the amount of looseness between the rod and the bearing holes also has a great effect on this tilt. For example, if the fitting pitch between the two ends (the interval between the supporting plates) is 2 mm, then if there is a looseness of 0.01 mm in the fitting of the two ends, this is equivalent to $\tan^{-1} (0.01/2) = 17'$ and hence a tilt of 17' occurs due to this cause alone, and in the whole image pickup device, a tilt of about 30 to 40' may occur.

On the other hand, as the number of pixels in the image pickup element increases, so the acceptable tilt sensitivity of the moving lens group becomes stricter, at about 10 to 15'. Therefore, with a current composition, the accuracy required in relation to allowable component error is becoming ever stricter, and is liable to end in failure. Moreover, in the prior art technology described above, two supporting plates are required, and the thickness thereof (about 0.2 to 0.3 mm) is one factor which restricts the size in the thickness direction and presents a major obstacle to height reduction.

Patent Document 1: Japanese Patent Application Publication No. 2009-25377

Summary of the Invention

The present invention was devised in view of the foregoing circumstances, an object thereof being to provide an image pickup device, a method for manufacturing an image pickup device, and an adjusting jig, whereby the tilt accuracy of a moving lens group can be improved, independently of component accuracy, and reduction in height can be achieved.

According to the image pickup device and the method for manufacturing an image pickup device according to the present embodiment, one end of a rod in an ultrasonic linear actuator is supported tiltably by a first supporting section and after adjusting the position of the ultrasonic linear actuator in such a manner that an element surface of an image pickup element is perpendicular to an optical axis of a moving lens group which engages with the rod, a piezoelectric element which is connected to another end of the rod is fixed by adhesive to a second supporting section which is disposed in the vicinity of the piezoelectric element. Furthermore, the adjusting jig relating to the present invention comprises; a first jig which is used for the positional adjustment and abuts against a reference surface of the image pickup element; a second jig which abuts against a reference surface of a holding member which holds the moving lens group, the reference surface being perpendicular to the optical axis of the moving lens group; and an adhesive filling unit for ejecting adhesive. Therefore, the image pickup device, the method for manufacturing an image pickup device and the adjusting jig relating to the present invention make it possible to improve the tilt accuracy of the moving lens group independently of the component accuracy, as well as achieving height reduction.

The aforementioned objects and further objects, characteristics and advantages of the present invention will become apparent from the following detailed description with reference to the accompanying drawings.

Brief Description of the Drawings

[Fig. 1] Fig. 1 is a vertical cross-sectional diagram of an image pickup device relating to one embodiment of the present invention.
[Fig. 2] Fig. 2 is an exploded perspective diagram of the image pickup device shown in Fig. 1.
[Fig. 3] Fig. 3 is a perspective diagram showing a more detailed view of Fig. 2.
[Fig. 4] Fig. 4 shows an enlarged cross-sectional diagram along line IV - IV in Fig. 1, and depicts the connecting structure between a lens unit and a holding member relating to one embodiment of the present invention.
[Fig. 5] Fig. 5 is a cross-sectional diagram showing a structure in which there are two lenses, in relation to Fig. 4.
[Fig. 6] Fig. 6 is a cross-sectional diagram showing a structure in a case where the present embodiment is used to bond a lens with a ball frame, in relation to Fig. 4.
[Fig. 7] Fig. 7 is a cross-sectional diagram showing an enlarged view of the portion indicated by reference numeral α in Fig. 1 and depicts an air flow structure relating to one embodiment of the present invention.
[Fig. 8] Figs. 8A and 8B are diagrams of a portion of an optical element.
[Fig. 9] Fig. 9 is a perspective diagram showing a state of application of adhesive for achieving the air flow structure shown in Fig. 7.
[Fig. 10] Fig. 10 is a perspective diagram showing an assembled state of front and rear frame, excluding the internal structure, in the image pickup device shown in Fig. 1.
[Fig. 11] Figs. 11A to 11D are diagrams of a rear frame shown in Fig. 10.
[Fig. 12] Figs. 12A to 12D are diagrams of a front frame shown in Fig. 10.
[Fig. 13] Fig. 13 is a cross-sectional diagram showing the structure of an adjusting jig for adjusting the angle of installation of the ultrasonic linear actuator as well as performing bonding.
[Fig. 14] Fig. 14 is a schematic cross-sectional diagram showing an enlarged view of a state during molding of the rear frame.
[Fig. 15] Fig. 15 is a plan diagram showing a view of a state during molding of the rear frame.
[Fig. 16] Fig. 16 is a schematic drawing showing a further state during molding of the rear frame.
[Fig. 17] Figs. 17A and 17B are cross-sectional diagrams of a further frame structure and a state thereof during molding.
[Fig. 18] Fig. 18 is a schematic cross-sectional diagram showing an enlarged view of a state during molding of the front frame.
[Fig. 19] Fig. 19 is a cross-sectional diagram showing a schematic view of a state during assembly of the ultrasonic linear actuator on the front frame.
[Fig. 20] Fig. 20 is a cross-sectional diagram for describing the extraction of lead wires of the ultrasonic linear actuator relating to one embodiment of the present invention.
[Fig. 21] Fig. 21 is a cross-sectional diagram viewed along line XXI - XXI in Fig. 20.
[Fig. 22] Fig. 22 is a front view diagram for describing a holding structure of a first group unit.
[Fig. 23] Fig. 23 is an exploded perspective diagram of Fig. 22.
[Fig. 24] Fig. 24 is a front view diagram showing a further holding structure based on a pressing member corresponding to Fig. 22.
[Fig. 25] Fig. 25 is a cross-sectional diagram viewed along line XXV - XXV in Fig. 22.
[Fig. 26] Fig. 26 is a front view diagram showing a further holding structure based on a holding member and pressing member corresponding to Fig. 22.
[Fig. 27] Fig. 27 is a diagram showing a holding structure based on a further pressing member corresponding to Fig. 25.
[Fig. 28] Fig. 28 is a diagram showing a further holding structure based on a pressing member corresponding to Fig. 25.
[Fig. 29] Fig. 29 is a diagram for describing a modified state when the front end portion of the rod is fitted onto the front frame.

Description of Embodiments

Below, one embodiment of the present invention are described with reference to the drawings. The parts of the composition which are labeled with the same reference numerals in the respective drawings are the same parts of the composition, and description thereof is omitted, where appropriate. Furthermore, in the present specification, reference numerals without suffixes are used when providing a general description, and reference numerals with suffixes are used when indicating a specific composition.

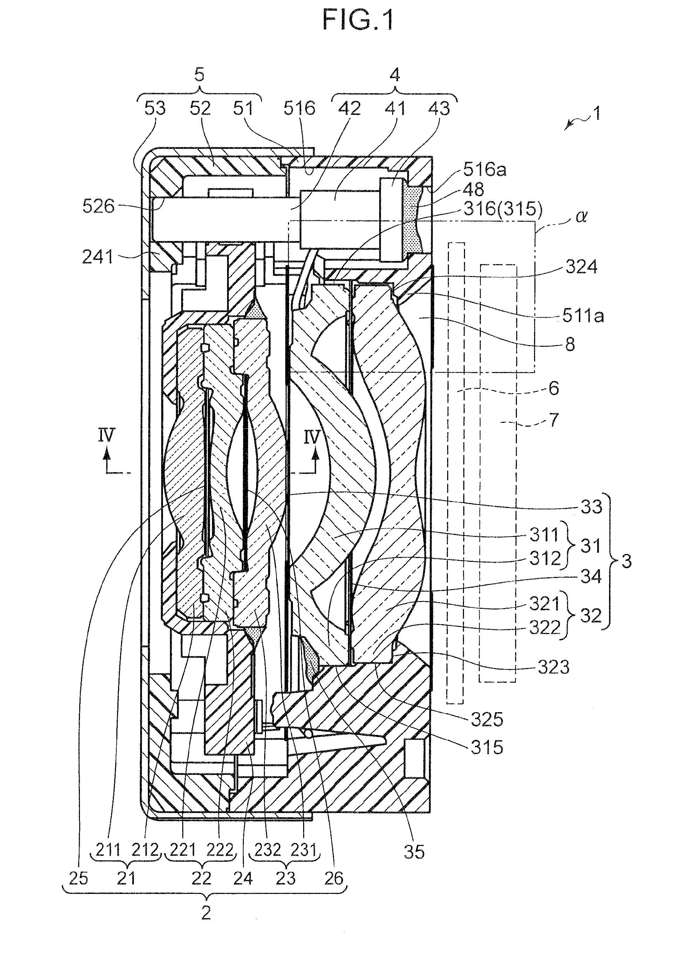

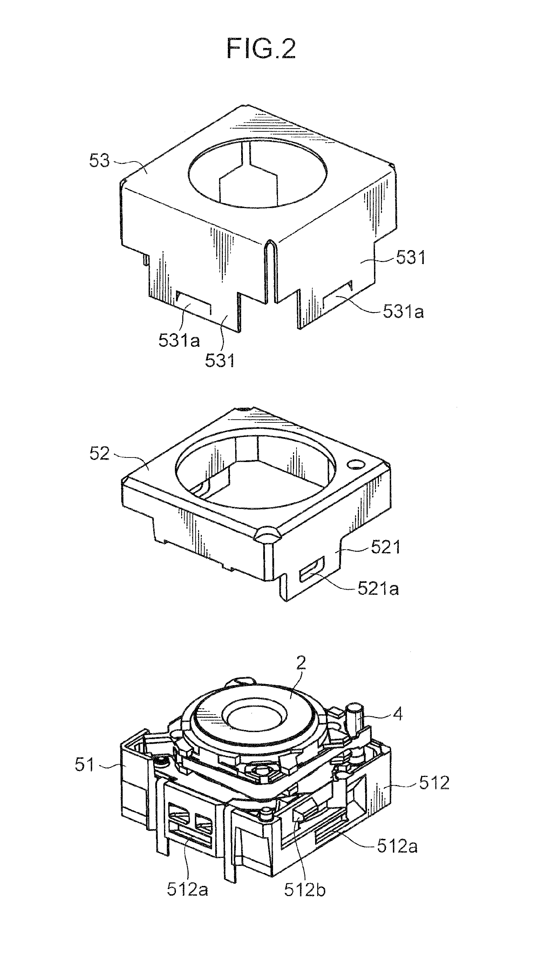

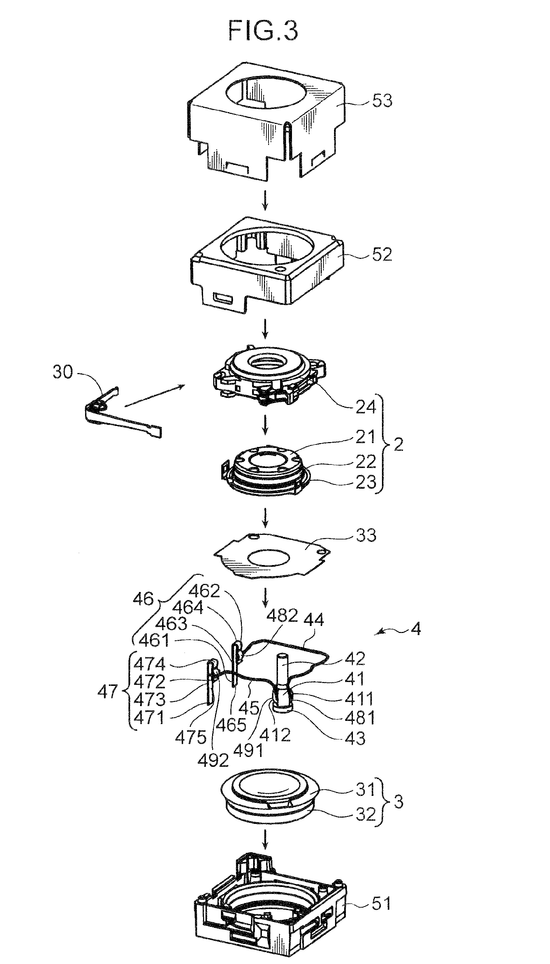

Fig. 1 is a vertical cross-sectional diagram of an image pickup device 1 relating to one embodiment of the present invention. Fig. 2 is an exploded perspective diagram, and Fig. 3 is a perspective diagram which is further exploded. As shown in Fig. 1 to Fig. 3, this image pickup device 1 is constituted by a first group unit 2 which is a moving lens unit, a second group unit 3 which is a fixed lens unit, an ultrasonic linear actuator 4 which drives the first group unit 2 in an optical axis direction, a frame 5 which accommodates the first and second group units 2, 3, and the ultrasonic linear actuator 4, a filter 6, and an image pickup element 7. This image pickup device 1 is suitable for mounting in a portable telephone terminal device.

The image pickup element 7 is constituted by a CCD type or CMOS type image sensor, and is mounted on a printed substrate in the terminal device. Furthermore, the filter 6 is constituted by an infrared-shielding filter which is installed in an integrated fashion with the image pickup element 7. In Fig. 2 and Fig. 3, and the subsequent drawings, the filter 6 and the image pickup element 7 are not depicted.

The first and second group units 2, 3, constitute a two-group five-lens fixed-focus lens unit. The ultrasonic linear actuator 4 drives the first group unit 2 in order to achieve autofocus. The first group unit 2 is constituted by three optical elements 21, 22, 23, a holding member 24 which holds these optical elements 21, 22, 23, light shielding plates 25, 26, and a pressing member 30 which is described below. The second group unit 3 is constituted by two optical elements 31, 32, and light shielding plates 33, 34, and these optical elements 31, 32 are held on a rear frame 51, described hereinafter, which is a holding member.

The optical elements 21, 22, 23; 31, 32 are formed by plastic lenses, for example, and comprise: lens sections 211, 221, 231; 311, 321 which form a light path; and holding sections 212, 222, 232; 312, 322 which hold the lens sections 211, 221, 231; 311, 321 from the outer circumferential side, these lens sections and holding sections being molded together in an integrated fashion. The light shielding plates 25, 26, 33, 34 for shielding unwanted light are provided respectively between the lens sections 211, 221, 231, 311, 321.

The ultrasonic linear actuator 4 forming a drive mechanism of the first group unit 2, which is a moving lens group, is an actuator suited to miniaturization as proposed previously by the present applicants in Japanese Patent Application Publication No. 2001-268951, or the like, and is known as an SIDM (Smooth Impact Drive Mechanism) (registered trademark)). In this ultrasonic linear actuator 4, a rod 42 is connected to one end of a piezoelectric element 41 which expands and contracts in an axial direction and a weight 43 is connected to another end of the piezoelectric element 41, the rod 42 being moved reciprocally by expansion and contraction of the piezoelectric element 41, and the first group unit 2 is moved in the optical axis direction by means of the holding member 24 of the first group unit 2 engaging with the rod 42 with a prescribed frictional force.

More specifically, in this ultrasonic linear actuator 4, the displacement of the piezoelectric element 41 has a triangular waveform due to applying a square wave to the piezoelectric element 41, and by altering the duty of the square wave, triangular waves having different gradients are generated in the rise of the amplitude and the fall of the amplitude. This is utilized in the drive mechanism of the ultrasonic linear actuator 4. For example, by slowly elongating the rod 42, the first group unit 2 which is engaged by friction with the rod 42 also moves in accordance with this elongation, and if the rod 42 is then contracted instantaneously so as to exceed the prescribed frictional force, then the first group unit 2 is left at the elongated position. By repeating elongation and contraction of the rod 42 in this way, it is possible to move the first group unit 2 in the axial direction of the rod 42.

The weight 43 is provided in order that displacement due to the expansion and contraction of the piezoelectric element 41 occurs only on the side of the rod 42, and in cases where a function similar to that of the weight 43 can be displayed by, for instance, attaching the other end of the piezoelectric element 41 to the frame 5, then the weight 43 can be omitted. Furthermore, the rod 42 is engaged with the holding member 24 by using a frictional force which is generated as described below, but this engagement may also be achieved by using magnetic force.

The piezoelectric element 41 of the ultrasonic actuator 4 is composed by layering a plurality of piezoelectric layers and extracting common electrodes for each of the piezoelectric layers on a pair of side faces. The electrodes 411, 412 on the side faces are respectively connected to external connection terminals 46, 47 via independent lead wires 44, 45. The front ends 461, 471 of the external connection terminals 46, 47 are soldered to a printed substrate of the portable telephone terminal device, or plugged into a connector installed on the printed substrate. The installation and wiring of the ultrasonic actuator 4 is described in detail below.

The frame 5 is constituted by a rear frame 51, which is a molded resin part, a front frame 52 which is assembled with the rear frame 51 to form a box shape, and a front cover 53 which is formed by processing metal plate and serves as an electromagnetic shield and an external surface. The structure of the frame 5 is described in detail below.

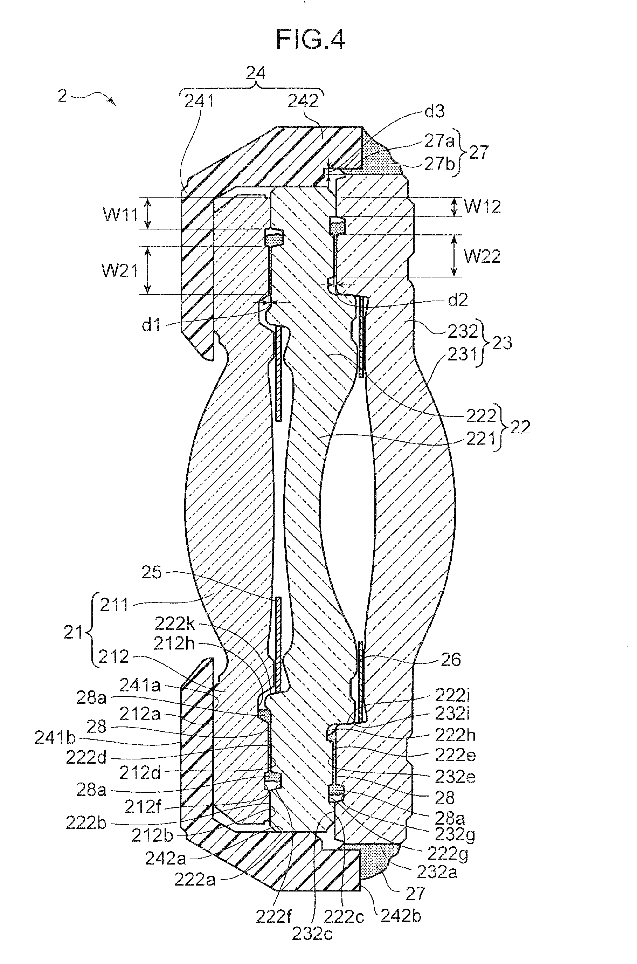

Fig. 4 is a diagram showing an enlarged cross-sectional view along line IV - IV in Fig. 1. Fig. 4 is a diagram for providing a detailed description of the bonding between the optical elements 21, 22, 23 in the first group unit 2 and the bonding structure of the lens block formed by these bonded optical elements, on the holding member 24. In the assembly of the first group unit 2, firstly, a light shielding plate 26 is interposed between the optical elements 22, 23, the optical elements 22, 23 are bonded to each other by a butt joint, and furthermore the light shielding plate 25 is interposed between the optical elements 21, 22 and aligned with the center of the optical element 21, and the optical elements 21, 22 are then bonded to each other by a butt joint, thereby completing the lens block.

Thereupon, the lens block is fitted into the tubular holding member 24, with the optical element 21 side first, and the front end surface 212a of the holding section 212 abuts against a rear surface (image side surface) 241 a of a pressing plate 241 which is formed in a flange shape oriented inwards toward the front end (object side) of the holding member 24, an outer circumferential surface 222a of the holding section 222 of the optical element 22 is abutted against an inner circumferential surface 242a of a tubular section 242 of the holding member 24, and in this state, an outer circumferential surface 232a of the holding section 232 of the optical element 23 on the last side (image side) and an end surface 242b of the tubular section 242 are bonded and fixed together with adhesive 27, thereby completing the first group unit 2.

Here, in the first group unit 2 which is formed by bonding together the plurality of optical elements 21, 22, 23 in this way, the holding sections 212, 222, 232 have abutting surfaces 212b, 222b, 222c, 232c which delimit the intervals between the lens sections 211, 221, 231 of the mutually adjacent optical elements 21, 22, 23 and adhesive application surfaces 212d, 222d, 222e, 232e which are mutually opposing via predetermined intervals d1, d2, and groove sections 212f, 222f, 222g, 232g extending in the circumferential direction are formed at the boundaries between these surfaces in order to prevent infiltration of adhesive 28 from the adhesive application surfaces 212d, 222d, 222e, 232e into the abutting surfaces 212b, 222b, 222c, 232c. The abutting surfaces 212b, 222b, 222c, 232c which are mutually opposing are formed in an annular shape with respective widths of W11 and W12 in the radial direction, and the adhesive application surfaces 212d, 222d, 222e, 232e are formed in an annular shape with respective widths of W21, W22 in the radial direction. The intervals d1, d2 are set to 0.005 to 0.01 mm, for instance, and the widths W21, W22 are set to 0.4 mm, for instance.

By adopting a composition of this kind, adhesive 28 is applied to at least one of the mutually opposing adhesive application surfaces 212d, 222d, 222e, 232e, in each of the holding sections 212, 222, 232, the mutually adjacent optical elements 21, 22, 23 are pressed against each other, and the adhesive 28 is cured by heating or irradiation of ultraviolet light, or the like, thereby bonding the optical elements 21, 22, 23 together, securely and simply, by means of butt joints. Moreover, in the pressure application process, any surplus adhesive flows into the groove sections 212f, 222f, 222g, 232g, as shown by reference numeral 28a, thereby making it possible to prevent the adhesive 28 from oozing out onto the abutting surfaces 212b, 222b, 222c, 232c, and hence surplus error is not added to the intervals between the lens sections 21, 22, 23 and optical characteristics can be guaranteed.

Furthermore, in the holding sections 212, 222, 232, by arranging the abutting surfaces 212b, 222b, 222c, 232c on the outer circumferential side and arranging the adhesive application surfaces 212d, 222d, 222e, 232e on the inner circumferential side, the intervals between the lens sections 211, 221, 231 are delimited at the outer circumferential sides of the holding sections 212, 222, 232, and the intervals (spans) between the abutting surfaces 212b, 222b, 222c, 232c are larger than if delimited at the inner circumferential sides. Consequently, it is possible to further reduce error in the intervals (including tilt) and eccentricity due to manufacturing error, as well as being able to prevent surplus adhesive 28a from oozing out from the outer circumferential sides of the holding sections 212, 222, 232 and hence the bonded optical elements 21, 22, 23 can be installed accurately on the holding member 24.

Moreover, in the holding sections 212, 222, groove sections 212h, 222h are formed in the mutually opposing adhesive application surfaces 212d, 222d, 222e, 232e, on the sides adjacent to the lens sections 211, 221, 231. By forming groove sections 212h, 222h in the vicinity of the innermost circumference of the holding sections 212, 222 in this way, it is also possible to prevent the surplus adhesive indicated by reference numeral 28a from oozing out onto the lens sections 211, 221, 231, and optical characteristics can be guaranteed.

Furthermore, a projection or rib 222k which interlocks with the groove section 212h formed in an annular shape in the holding section 212 is formed in the holding section 222 opposing the groove section 212h, and the inner diameter of the groove section 212h is formed to a prescribed dimension larger than the outer diameter of the projection or rib 222k. More specifically, when the optical elements 21, 22 are butt joined to each other, the groove section 212h into which the surplus adhesive indicated by reference numeral 28a flows is formed in a larger annular shape in one element, and the projection or rib 222k is formed to be slightly smaller in the other element, and when the elements are bonded to each other, the projection or rib 222k fits into the groove 212h without the surplus adhesive 28a flowing out from the groove section 212h, due to the presence of the projection or rib 222k. The relationship between the projection or rib 222k and the groove section 212h is such that the internal diameter of the groove section 212h is formed to be a prescribed dimension larger than the external diameter of the projection or rib 222k, so as to allow displacement between the mutually adjacent optical elements 21, 22 in the direction perpendicular to the optical axis.

Consequently, in the first group unit 2 in the image pickup device 1 according to the present embodiment, the center of the optical element 21 can be adjusted as described below by adjusting the aforementioned displacement, and by curing the adhesive 28 after aligning the centers and fixing the optical elements 21, 22 to each other, it is possible to eliminate the center alignment frame required in the prior art.

Moreover, the optical elements 21, 22, 23 are made of plastic lenses, and the holding sections 212, 222, 232 are formed by holding pieces which extend in at least one portion of the outer circumferential edges of the lens sections 211, 221, 231, these holding pieces being molded in an integrated fashion. Furthermore, the holding sections 212, 222, 232 are butt joined to each other as described above. Here, if the lens sections are made of glass lenses, then the holding frames forming the holding sections are often provided separately, and these holding pieces are bonded and fixed as explained previously, but by butt joining the optical elements 21, 22, 23 as described above, it becomes unnecessary to use separate holding frames for bonding together the optical elements 21, 22, 23.

On the other hand, in the first group unit 2 as described above, in order to form a lens unit by holding a plurality of optical elements 21, 22, 23 in a tubular holding member 24, the lens block is composed by previously bonding and fixing together the optical elements 21, 22, 23, and hence the optical element 22 which is fitted into the holding member 24 can be divided from the optical element 23 that is bonded. By utilizing this feature and providing a slight interval d3 between the holding member 24 and the optical element 23 to be bonded, in addition to an adhesive pool 27b which is formed by normal mounding up of the adhesive 27, then an adhesive layer 27a is provided.

More specifically, when the optical elements 21, 22, 23 formed of plastic lenses are fitted into the holding member 24, at least one optical element, and desirably the optical element 22 which is made of a material having a small coefficient of linear expansion, is fitted on the inner circumferential surface 242a of the tubular holding member 24, in other words, is engaged in the radial direction of the holding member 24. On the other hand, by forming the lens block by previously bonding the remaining optical elements 21, 23 to the optical element 22, positioning such as alignment of the optical axes and the tilt adjustment is achieved. At least a portion of the remaining optical elements 21, 23, and desirably the optical element 23 on the rear side (image side) which is fitted lastly into the tubular holding member 24, is formed with an outer circumferential surface 232a which is parallel with the inner circumferential surface 242a of the holding member 24 at a predetermined slight interval d3 therefrom, and adhesive 27 is filled in between the inner circumferential surface 242a and the outer circumferential surface 232a, whereby the lens block is bonded to the holding member 24.

In this way, the adhesive 27 filled in between the optical element 23 and the holding member 24 forms an adhesive layer 27a between the inner circumferential surface 242a and the outer circumferential surface 232a, as well as forming an adhesive pool 27b between the end surface 242b of the tubular section 242 and the outer circumferential surface 232a. By adopting a composition of this kind, it is possible to improve the bonding strength by utilizing the retaining force in the shearing direction created by the adhesive layer 27a formed in the small interval d3 between the inner circumferential surface 242a of the holding member 24 and the outer circumferential surface 232a of the optical element 23, which are parallel to each other, without using separate members such as a lens pressing element, and without creating surplus space in the depth direction for pressing and caulking of the lens. By this means, it is possible to achieve miniaturization and height reduction, while improving reliability in respect of vibration and shocks.

The small interval d3 is desirably no more than 0.1 mm. If d3 is no more than 0.1 mm, it is possible to generate a large retaining force in the shearing direction, in the adhesive layer 27a, in other words, a large shearing force is required in order to cleave the adhesive in the adhesive layer 27a, and hence the lens block becomes difficult to remove from the holding member 24.

Furthermore, if the three optical elements 21, 22, 23 are bonded to each other as described above, then step differences 222i, 232i in the optical axis direction which are mutually interlocking and inhibit mutual displacement in the direction perpendicular to the optical axis, are provided in the holding sections 222, 232 of the intermediate optical element 22 and the rear side (image side) optical element 23. Consequently, it is possible to align the centers and inhibit displacement between the holding sections 222, 232 in the perpendicular direction to the optical axis (radial direction), simply by bonding together the adhesive application surfaces 222e, 232e.

On the other hand, flat surfaces which allow displacement between the abutting surfaces 222b, 212b and the adhesive application surfaces 222d, 212d in the direction perpendicular to the optical axis are formed on the holding sections 222, 212 of the intermediate optical element 22 and the front side (object side) optical element 21, in such a manner that the centers of the optical elements 22, 21 can be aligned within the range permitted by the groove section 212h and the projection or rib 222k. Therefore, when bonding the optical element 21 after bonding the optical elements 22, 23, an ultraviolet-curable adhesive is applied as an adhesive 28 to the adhesive application surfaces 222d, 212d, and after aligning the centers of the elements, the adhesive 28 is solidified by irradiating ultraviolet light.

When bonding the optical element 21 to the optical elements 22, 23, the optical elements 22, 23 are provisionally assembled in a jig together with the members corresponding to the optical elements 31, 32 and the image pickup element 7, the optical element 21 is installed in another jig, and the centers are aligned by adjusting the positions of the two jigs while checking the image output of the image pickup element 7 (while observing the optical characteristics). More specifically, a chart is placed on the object side, an image of this chart is captured by the image pickup element 7 via the provisionally assembled optical elements 21, 22, 23, 31, 32, and the optical element 21 (other jig) is moved in a direction perpendicular to the optical axis in accordance with the state of the captured image (uneven blurring, etc.). In this way, it is possible to unite the optical elements 21, 22, 23 into a single body, while adjusting so as to obtain prescribed optical characteristics.

In the optical elements 21, 22, 23 which are unified in a lens block, by fitting the intermediate optical element 22 into the inner circumferential surface 242a of the tubular holding member 24 and bonding the outer circumferential surface 232a of the rear side (image side) optical element 23 to the inner circumferential surface 242a of the holding member 24, it is possible to improve reliability in respect of vibration and shocks. Furthermore, in the composition of the three optical elements 21, 22, 23 described above, when aligning the centers, conventionally, the optical element 21 is held on a centre alignment frame in relation to a frame which holds the optical elements 22, 23 in unison, and after aligning the positions, the two frames are bonded together, but in the present embodiment, the optical element 21 is bonded to the optical element 22 by a butt join, and therefore the centre frame can be eliminated and size reduction and height reduction can be achieved.

In the example described above, a retaining pressing plate 241 is formed on the front end side (object side) of the holding member 24, and optical elements 21, 22, 23 which are unified to create the lens block are fitted from the rear side (object side) of the holding member 24, but if a pressing plate 241 is provided on the rear end side (image side) and the optical elements 21, 22, 23 are fitted from the front side (object side), then the optical element 21 on the front side (object side) is bonded to the holding member 24.

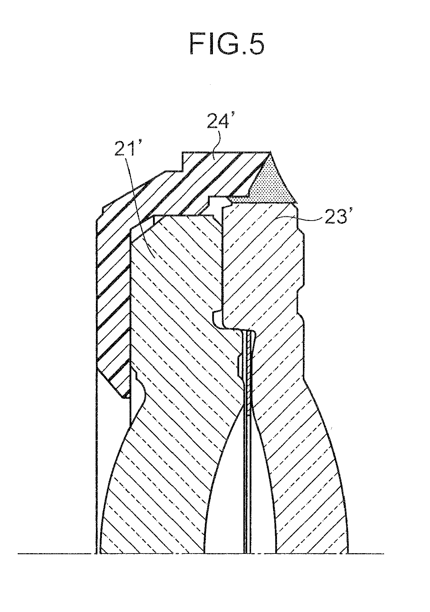

Furthermore, the optical elements 21, 22, 23 which constitute the first group unit 2 are three in number, but they may be two or four or more in number. If there are two optical elements which are fitted from the rear side (image side) of the holding member 24, as shown in Fig. 5, the optical element 21' on the front side (object side) is fitted into the holding member 24', and the rear side (image side) optical element 23' is bonded to the holding member 24'. Furthermore, if there are four or more optical elements, desirably, at least the optical elements in substantially intermediate positions are fitted into the holding member 24.

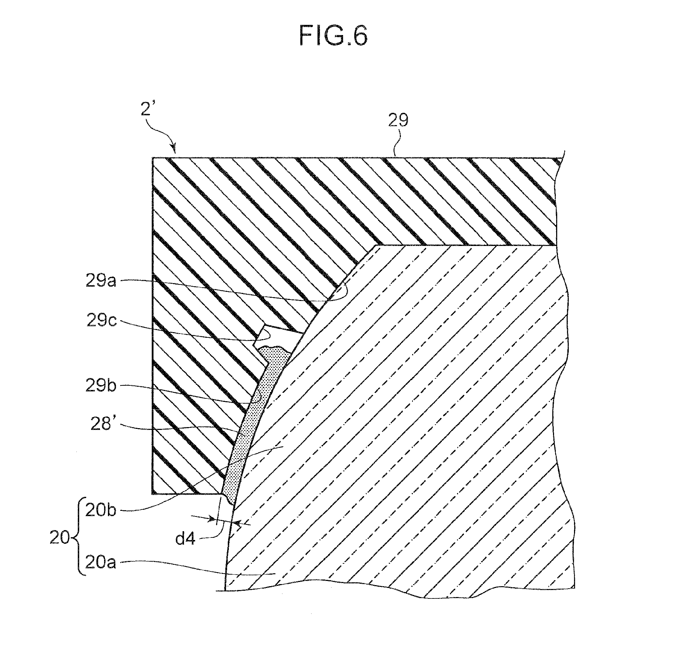

Moreover, in the present embodiment, the optical elements 21, 22, 23 comprise lens sections 211, 221, 231 and holding sections 212, 222, 232 which are formed extending from the outer circumferential edges thereof, and groove sections 212f; 222f, 222g; 232g are formed so as to divide between the abutting surfaces 212b; 222b, 222c; 232c and the adhesive application surfaces 212d; 222d, 222e; 232e in the holding sections 212, 222, 232, but as shown in Fig. 6, it is also possible to use the optical elements 21, 22, 23 in a case where a single-body lens 20 is bonded to a holding member 29 such as a lens tube or frame, or the like.

In other words, in a lens unit 2' formed by joining together a single lens 20 having a lens section 20a and an outer edge part 20b which extends on the outer circumferential side of the lens section 20a, and a holding member 29 which holds the lens 20, the holding member 29 comprises an abutting surface 29a which abuts against the outer perimeter part 20b and performs positioning in the optical axis direction and an adhesive application surface 29b which opposes the outer edge part 20b at a prescribed interval d4 therefrom and onto which adhesive 28' is applied, and a groove section 29c extending in the circumferential direction is formed at the boundary between the abutting surface 29a and the adhesive application surface 29b. By adopting a composition of this kind, it is possible to prevent the adhesive 28' from oozing out onto the abutting surface 29a from the adhesive application surface 29b, and optical properties can be guaranteed, without adding surplus error to the installation of the single lens 20 on the holding member 29.

On the other hand, in the second group unit 3, an optical element 32, a light shielding plate 34 and an optical element 31 are fitted successively into a fitting hole 511 which is formed in the rear frame 51, and are fixed by adhesive 35. Here, in the second group unit 3 which is a fixed lens group and is provided with an image pickup element 7 on the rear side (image side), a step difference 324 is formed in a portion of the circumferential direction of the abutting surface 323 of the holding section 322 of the optical element 32 on the rear side (image side), which abuts with the rear frame 51 that is the holding member, and furthermore, a cutaway 326 which connects with the step difference 324 is formed on the outer circumferential surface 325 of the holding section 322. In accordance with this, a cutaway 316 is also formed in the outer circumferential surface 315 of the holding section 312 of the optical element 31 on the front side (object side), and the space 8 between the second group unit 3 and the image pickup element 7 is connected to the exterior only via the step difference 324 and the cutaways 326, 316.

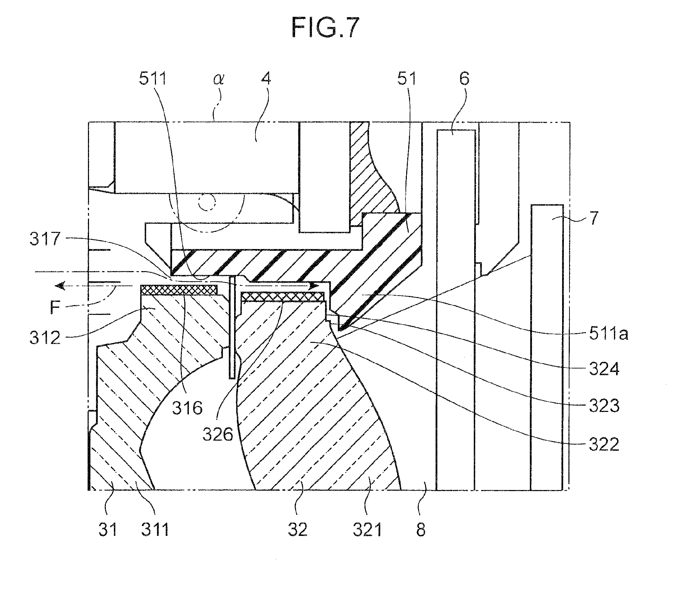

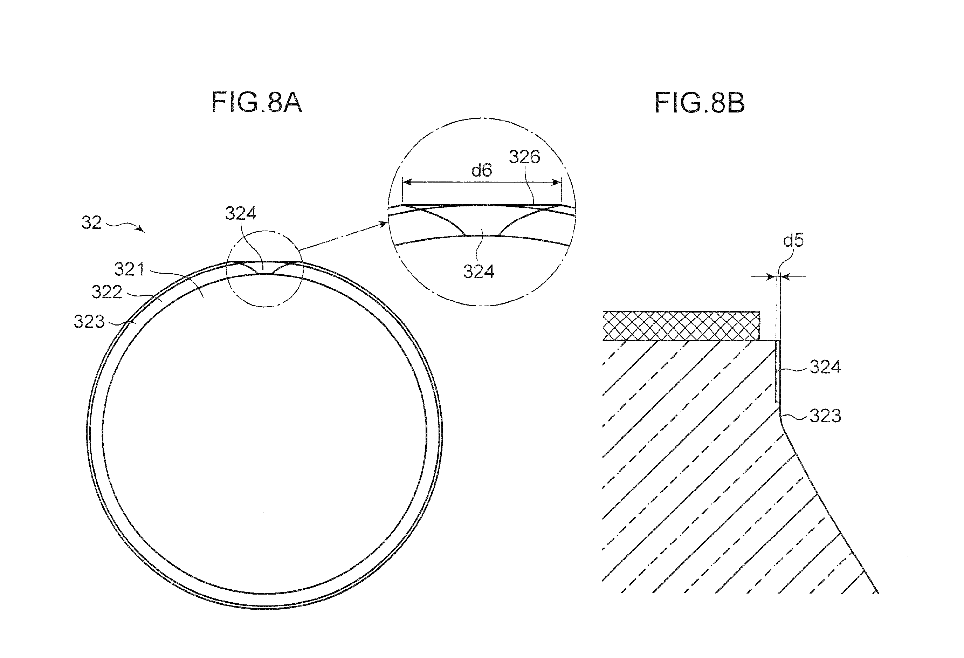

Fig. 7 is a cross-sectional diagram showing an enlarged view of the portion indicated by reference numeral α in Fig. 1. Fig. 8A is a front view diagram of an optical element 32, and Fig. 8B is a cross-sectional diagram showing an enlarged view of the vicinity of the peripheral portion of the holding section 322. A pressing plate 511 a formed in an inward-oriented flange (collar) shape is provided on the rear end (image side) of the fitting hole 511 in the rear frame 51 and this pressing plate 511a holds the abutting surface 323 of the holding section 322 of the optical element 32.

Therefore, a gap of distance d5 is formed between the holding section 322 and the pressing plate 511a, due to the step difference 324 which is formed in a portion of the abutting surface 323.

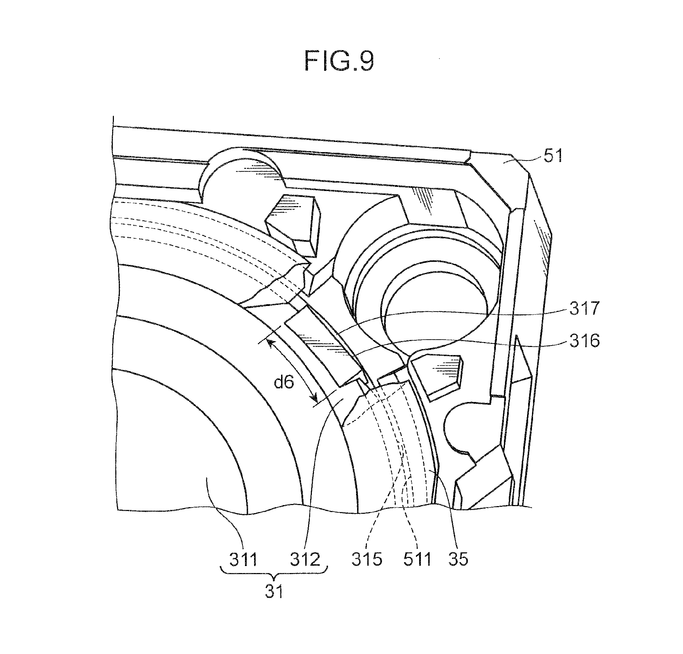

Furthermore, the optical elements 32, 31 which are made of plastic lenses are molded by extrusion molding and then processed with a D cut at the gate position, in a burr removal step. The cutaways 326, 316 are formed by this D cut, the range of the D cut being indicated by the interval d6 in Fig. 8A, and the range of variation in the diameter due to the D cut is indicated by the hatching in Fig. 7 and Fig. 8B. In Fig. 8, the step difference 324 is depicted in exaggerated fashion. After assembling the optical elements 32, 31 on the rear frame 51, as shown in Fig. 9, adhesive 35 is not applied through the interval d6 of the D cut and a gap 317 formed by the cutaways 326, 316 is opened to the exterior. If caulking or welding is used instead of adhesive 35, it should be ensured that this fixing (sealing) is not performed through the interval of d6. The interval d6 is about 0.3 to 0.8 mm, for example.

Here, in a small image pickup device in which lens replacement is not possible, the periphery of the moving lens group for autofocus or zoom is open to the external air (connected to the exterior) so as not to impede the movement of the moving lens group, but the space from the fixed lens group, which has a non-movable composition, to the image pickup element which is provided on the image side (rear side) is normally formed as a closed space in order to prevent infiltration of dirt, or alternatively, a filter, or the like, is provided in the path to this space in order to respond to expansion and contraction of the air inside the space as a result of temperature and pressure variation, and hence the inflow of external air is restricted.

On the other hand, in the present embodiment, the structures of the optical elements 32, 31 of the second group unit 3 which is an existing product and the rear frame 51 which is the holding member thereof are modified (the clearances are revised) as described above, and an air flow channel is formed as indicated by reference symbol F in Fig. 7, so as to respond to expansion and contraction of the air inside the space 8 due to temperature and pressure change. In other words, the air flow channel is formed by connecting the step difference 324 and the cutaway 326 in the holding section 322 of the optical element 32 with the cutaway 316 in the holding section 312 of the optical element 31. The width, height and diameter of the air flow channel are formed to be narrower than the diameter of dirt. More specifically, the interval d5 between the abutting surface 323 and the pressing plate 511a which is created by the step difference 324 is formed to be no more than 0.02 mm, which is the minimum size of dirt that may appear as a speck on the image.

By adopting a composition of this kind, the portion of the step difference 324 and the cutaways 326, 316 achieves a labyrinthine structure through which dirt cannot infiltrate, and furthermore this structure can be achieved easily and inexpensively, using existing constituent parts, without increasing the number of components or giving rise to separate components.

Furthermore, by using a D cut which is formed at the gate position during the extrusion molding of the optical elements 32, 31, for the cutaways 326, 316, it is possible to form the D cut in a burr removal step during molding, or the like, and an increase in the number of steps can be avoided.

At least one portion of the step difference 324 and the cutaways 326, 316 which form the air flow channel may be formed to be narrower than the minimum size of the dirt. Furthermore, the step difference 324 and the cutaway 326 which are provided in the same optical element 32 need to be situated at the same position in the circumferential direction, in other words, so as to connect to each other, as described above, but the cutaways 326, 316 in the optical elements 32, 31 do not necessarily have to be in matching positions in the circumferential direction. However, if these positions are matching, then an air escape path can be formed more readily.

Moreover, the step difference 324 and the cutaways 326, 316 may be formed in either the optical elements 32, 31 or the rear frame 51, but if they are formed in the optical elements 32, 31 as described above, the core processing of the rear frame 51 which is the holding member becomes easier, whereas if they are formed in the rear frame 51, the core processing of the optical elements 32, 31 becomes easier and the accuracy of the respective components can be improved.

Next, the composition of the frame 5 will be described. In Fig. 2 and Fig. 3, of the members which constitute the frame 5, the front cover 53 is a plate metal component which provides an electromagnetic shield and external finish (design), and after assembling the frames 51, 52, the front cover 53 is fixed to the rear frame 51 by means of engaging hooks 531a, which are provided on a side wall 531 and are covered by the front frame 52 side, respectively fitting into engaging recess sections 512a which are formed in the side wall 512 of the rear frame 51.

The frames 51, 52 are assembled together to form a box shape, as described above, inside which at least the first group unit 2, the second group unit 3 and the ultrasonic linear actuator 4 are accommodated. These frames 51, 52 are formed by molded resin parts having a shape obtained by dividing a box object into two parts on the front and rear sides in the optical axis direction, and the side walls 512, 521 of the box object are formed in a shape without through holes, whereby the interior of the box object is formed in an airtight fashion (the engaging recess sections 512a are recesses having sealed bottoms, rather than through holes).

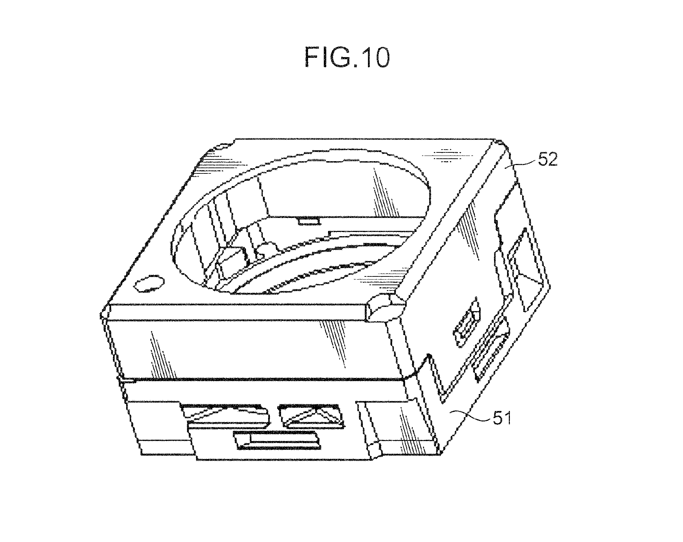

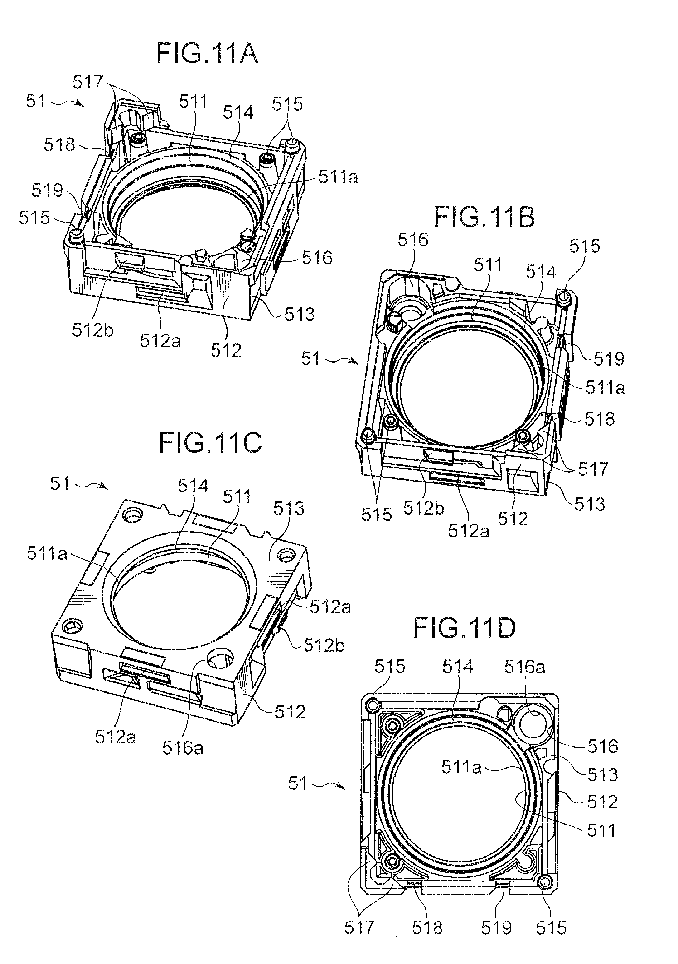

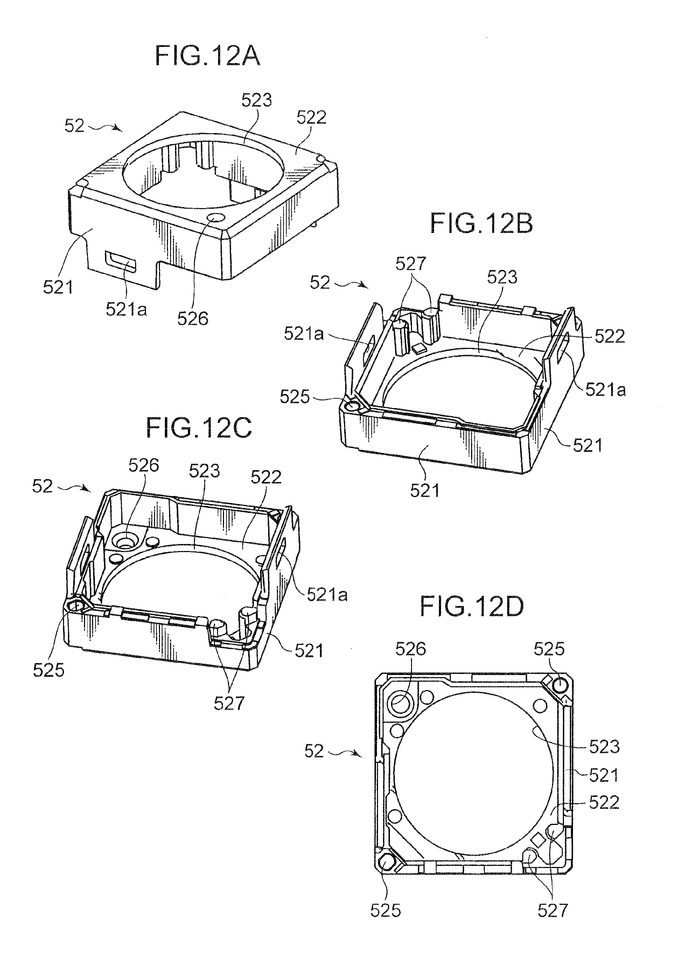

Fig. 10 is a perspective diagram showing a state in which only the frames 51, 52 are assembled, and the first group unit 2, the second group unit 3 and the ultrasonic linear actuator 4, and the like, are excluded. Furthermore, Figs. 11A to 11D are diagrams of the rear frame 51, in which Figs. 11A and 11B are perspective diagrams viewed from the front surface side (object side), Fig. 11C is a perspective diagram viewed from the rear surface (image side) and Fig. 11D is a front view diagram from the front surface side (object side). Similarly, Figs. 12A to 12D are diagrams of the front frame 52, in which Fig. 12A is a perspective diagram viewed from the front surface side (object side), Figs. 12B and 12S are perspective diagrams viewed from the rear surface side (image side) and Fig. 12D is a front view diagram from the rear surface side (image side).

In Fig. 10 to Fig. 12, and also referring to Fig. 1 and Fig. 2, the rear frame 51 is generally formed by erecting side walls 512 on the outer periphery side of a square base 513 and erecting a holding tube 514 on the inner periphery side thereof. The inner peripheral side of the holding tube 514 forms a fitting hole 511, which holds the second group unit 3. An engaging recess section 512a into which an engaging hook 531a on the front cover 53 fits is formed on the rear end side (image side) of all of the four surfaces of the side walls 512, and engaging projections 512b which fit into engaging holes 521a formed in the side walls 521 of the front frame 52 are formed in a pair of mutually parallel side walls. By this means, it becomes possible to install the front frame 52 and the front cover 53 on the rear frame 51 simply by this in-fitting operation, without performing special fixing tasks.

Moreover, a plurality of positioning bosses 515 are arranged in a suitable distributed fashion on the rear frame 51, and by fitting the bosses 51 into corresponding positioning holes 525 in the front frame 52, displacement of the frames 51, 52 in the direction perpendicular to the optical axis is prevented.

Furthermore, an accommodating recess section 516 for accommodating an ultrasonic linear actuator 4 is formed in one corner portion of the rear frame 51, and a pair of guide walls 517 which guide the first group unit 2 are formed in diagonally opposite corner portions of the rear frame 51. Moreover, installation recess sections 518, 519 corresponding to external connection terminals 46, 47 are formed on the side walls which are distant from the accommodating recess section 516.

The front frame 52 is formed by side walls 521 which are erected on the outer peripheral side of a square-shaped front surface plate 522, and an opening 523 which borders the outer periphery of the first group unit 2 is formed on the inner peripheral side of the plate 522. Furthermore, a fitting hole 526 into which the front end portion of the rod 42 of the ultrasonic linear actuator 4 is fitted is formed in one corner portion of the front frame 52, and a pair of guide walls 527 which guide the first group unit 2 are formed in diagonally opposite corner portions of the front frame 52.

Firstly, an optical element 32, a light shielding plate 34 and an optical element 31 are fitted in this sequence into the fitting hole 511 of the rear frame 52, as described above, after the frames 51, 52 have been assembled, and are bonded and fixed by adhesive 35, thereby completing the second group unit 3. Next, the ultrasonic linear actuator 4 is assembled in the accommodating recess section 516 of the rear frame 51, the external connection terminals 46, 47 of the ultrasonic linear actuator 4 are fitted into the installation recess sections 518, 519, and a pair of lead wires 44, 45 are extracted about the periphery of the second group unit 3 and pressed with the light shielding plate 33. Consequently, after the first group unit 2 which has been assembled in this way is engaged with the rod 42 of the ultrasonic linear actuator 4, the two frames 51, 52 are assembled with the front end portion of the rod 42 fitting into the fitting hole 526, and the engaging projections 512b are fitted into the engaging holes 521a, thereby fixing the frames 51, 52 to each other.

In this state, by fixing the front end of the rod 42 at one point only, the ultrasonic linear actuator 4 can be displaced on the piezoelectric element 41 side. This enables adjustment of the installation angle (tilt angle) of the ultrasonic linear actuator 4 with respect to the frames 51, 52, and after adjustment, the piezoelectric element 41 is fixed by bonding the rear surface 43a of the weight 43 to the base 513 of the rear frame 51. Consequently, an adjustment hole 516a which connects with the accommodating recess section 516 is formed in the base 513 in the vicinity of the rear surface of the weight 43. This adjustment hole 516a is formed to a smaller diameter than the weight 43. If the weight 43 is omitted, then the rear surface of the piezoelectric element 41 should be bonded to the base 513.

The tilt of the ultrasonic linear actuator 4 (the tilt of the rod 42) is readily adjusted by means of this adjustment hole 516a, and since a light-curable adhesive can be used, then the ultrasonic linear actuator 4 is bonded easily and with high reliability. Since the adjustment hole 516a opposes the end portion of the ultrasonic linear actuator 4 (on the piezoelectric element 41 side), and the rear surface thereof is exposed, then it is possible to readily fix the end portions of the ultrasonic linear actuator 4 in axial symmetry. Therefore, change in tilt due to temperature variation, during bonding, or in the event of a shock, is suppressed, and reliability is improved. Furthermore, since a light-curable adhesive can be used, then the bonding time is shortened and variation in the tilt during bonding is suppressed. Moreover, since the size of the adjustment hole 516a is smaller than the end portion of the ultrasonic linear actuator 4, then adhesive fills into the adjustment hole 516a, thus bonding and sealing together the end portion of the ultrasonic linear actuator 4 and the perimeter of the adjustment hole, and hence the infiltration of dirt is prevented.

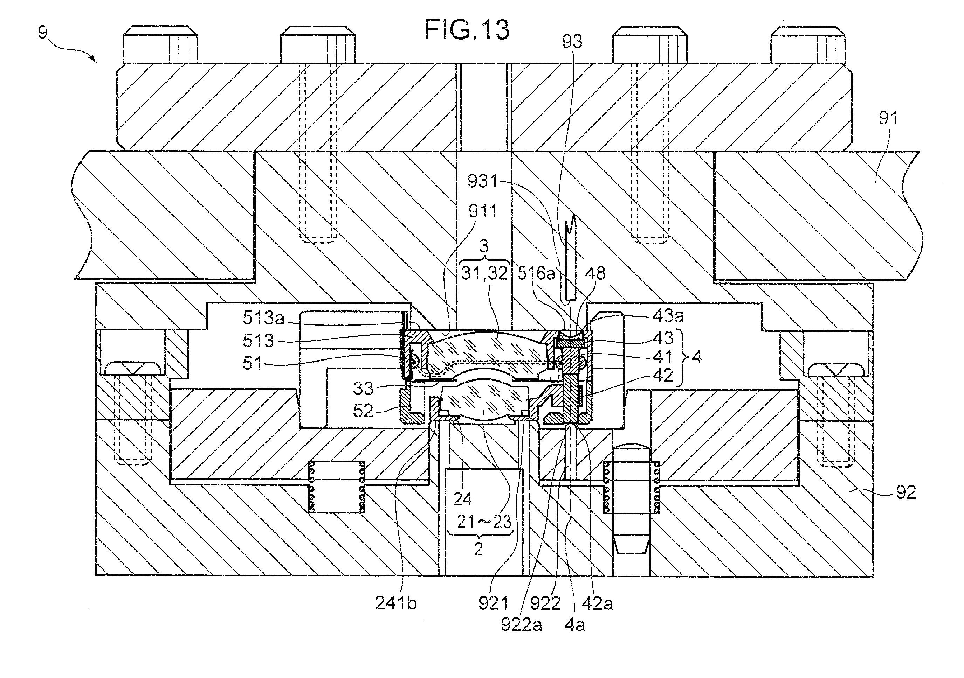

Fig. 13 is a cross-sectional diagram showing the structure of an adjusting jig 9 for adjusting the angle of installation (tilt angle) of an ultrasonic linear actuator 4 of this kind and performing bonding. In broad terms, this adjusting jig 9 comprises a first jig 91, a second jig 92 and an adhesive filling section 93. The first jig 91 grips the rear frame 51 and forms an installation reference surface for the image pickup element 7 in the rear frame 51 on which the second group unit 3 has been installed, and has an abutting surface 911 which is parallel to the element surface of the image pickup element 7 and abuts with a rear surface 513a of the base 513 which is formed perpendicularly with respect to the second group unit 3. The second jig 92 forms a reference surface for the first group unit 2 and has an abutting surface 921 which is parallel to the abutting surface 911 on the first jig 91 and which abuts with the front surface 241b of the pressing plate 241 that is formed perpendicularly to the optical axis of the first group unit 2.

Consequently, when the second jig 92 suctions the first group unit 2, then it is possible to adjust the angle between the optical axis of the first group unit 2 and the element surface of the image pickup element 7, to a perpendicular angle. The adhesive filling section 93 has an ejection port 931 in the vicinity of the adjustment hole 516a. After the optical axis of the first group unit 2 is adjusted in the manner described above, an ultraviolet-curable adhesive 48 is ejected toward the rear end surface 43a of the weight 43 from the ejection port 931, and when ultraviolet light is irradiated thereon, the weight 43 becomes fixed to the base 513.

Fig. 1 shows a state where, after assembling the parts in this way, the device has been removed from the adjusting jig 9 and the front cover 53 has been fitted therein. By using an adjusting jig 9 of this kind, it is possible to adjust the tilt of the first group unit 2, which is a movable lens group, and to readily bond and fix the ultrasonic linear actuator 4 to the rear frame 51.

Here, in the second jig 92, a positioning pin 922 which abuts against the front end portion 42a of the rod 42 of the ultrasonic linear actuator 4 and which delimits the installation height of the ultrasonic linear actuator 4 has an abutting portion 922a which is formed with a spherical shape. Accordingly, the abutting portion 922a makes a point contact with the center of the front end portion 42a of the rod 42, whereby the adjustment of tilt can be stabilized.

After installing the image pickup element 7 on the rear frame 51, the tilt of the ultrasonic linear actuator 4 is adjusted by a simple operation of moving the rear surface 43a of the weight 43 from the adjustment hole 516a, to a point where optimum image quality is obtained, while monitoring the captured image, and furthermore, after adjusting the position of the image pickup element 7, and the like, with respect to the second group unit 3, the ultrasonic linear actuator 4 is bonded and fixed to the frame. In this case, it is possible to cancel out factors which cause deterioration of characteristics other than the first group unit 2, which is a movable lens group, in a composition based on a plurality of lens groups, and the required overall characteristics of the image pickup device can be achieved.

Moreover, a flat portion may be formed in a lens of the first group unit 2 which is supported on the rod 42 of the ultrasonic linear actuator 4, and the tilt of the rod 42 in the ultrasonic linear actuator 4 may be adjusted by using the light reflected by this flat portion. More specifically, firstly, light reflected from the flat surface which is parallel to the abutting surface 911 of the first jig 91 is received by an autocollimator, and the angle of the abutting surface 911, in other words, the angle of the element surface of the image pickup element 7 is set to a reference angle. The reflected light from the abutting surface 911 may be used as reflected light from a plane parallel to the abutting surface 911 or alternatively a reflective mirror may be arranged parallel to the abutting surface and the light reflected from this mirror may be used. Subsequently, the rear surface 513a of the base 513 is abutted against the abutting surface 911 and the image pickup device 1 is situated in the bonding jig 9. A flat portion which is perpendicular to the optical axis is formed in the lens on the frontmost surface of the first group unit 2. The reflected light from the flat portion of the lens is received by the autocollimator, and the tilt of the rod 42 of the ultrasonic linear actuator 4 is adjusted by moving the rear end surface 43a of the weight 43 from the adjustment hole 516a, in such a manner that the angle of reflected light from the lens becomes a reference angle. By this means, the reflected light from the lens surface (the optical axis of the lens) and the abutting surface 911 (the image pickup element installation reference surface) are adjusted so as to be perpendicular.

As described above, in an image pickup device 1 in which a first group unit 2 is moved in an optical axis direction by using an ultrasonic linear actuator 4 for the purpose of autofocus, for instance, the frames 51, 52 which form the general external shape of the image pickup device 1 are formed in the shape obtained by dividing a box object into two parts on the front and rear sides in the optical axis direction, and furthermore, the front end portion of the rod 42 of the ultrasonic linear actuator 4 is held by the front surface plate 522 of the front frame 52, and the piezoelectric element 42 is held via a weight 43 by the base 513 of the rear frame 51, thereby making it possible to form the side walls 512, 521 of the frames 51, 52 in an airtight shape, in other words, a shape which has no through holes. By this means, it is possible to prevent infiltration of dirt, as well as being able to raise the rigidity of the frames 51, 52, for instance, the resistance to pressing from the front surface, and to prevent breakdown of the ultrasonic linear actuator 4 due to the pressure applied to the frames 51, 52.

Moreover, a fitting hole 526 into which the front end portion 42a of the rod 42 of the ultrasonic linear actuator 4 is fitted and which supports the front end portion in such a manner that the ultrasonic linear actuator 4 can be inclined (tilted) in a prescribed range, is provided in the front surface plate 522 of the front frame 52, an adjustment hole 516a which borders the rear surface 43a of the weight 43 and is formed to be narrower than the rear surface 43a is formed in the base 513 of the rear frame 51, and after adjusting the position of the weight 43 with respect to the adjustment hole 516a in such a manner that the optical axis of the first group unit 2 is perpendicular to the element surface of the image pickup element 7, adhesive 48 is filled into the adjustment hole 516a and the weight 43 is fixed. Therefore, the angle of installation of the ultrasonic linear actuator 4 with respect to the frames 51, 52 can be adjusted, and the accuracy of the tilt of the first group unit 2, which is a movable lens group, can be improved irrespectively of the component accuracy. Furthermore, since the fitting hole 526 is sealed by the front end portion 42a of the rod 42 and the adjustment hole 516a is sealed by the rear surface 43a of the weight 43 and the adhesive 48, then there is no infiltration of dirt, the molded parts (front frame 52) are not required to have a large thickness in order to seal off the fitting hole 526, and the height can be reduced.

Furthermore, since only the front end side of the rod 42 of the ultrasonic linear actuator 4 is supported by the front surface plate 522, then broadly speaking, the length of the rod 42 can be restricted to the length of the portion supported by the front frame 52 plus the movement length of the first group unit 2. More specifically, in the prior art, there are two axle supporting portions, but only one is required and therefore the height of the device can be reduced in accordance with the fitting length of the axle. Moreover, even if an adjustment hole 516a is formed so as to adjust the tilt of the first group unit 2, since adhesive 48 is filled into this adjustment hole 516a to seal up the gap to the weight 43, it is possible to prevent infiltration of dirt.

The rod 42 of the ultrasonic linear actuator 4 may be supported on the base 513 of the rear frame 51, and the weight 43 may be supported on the front surface plate 522 of the front frame 52.

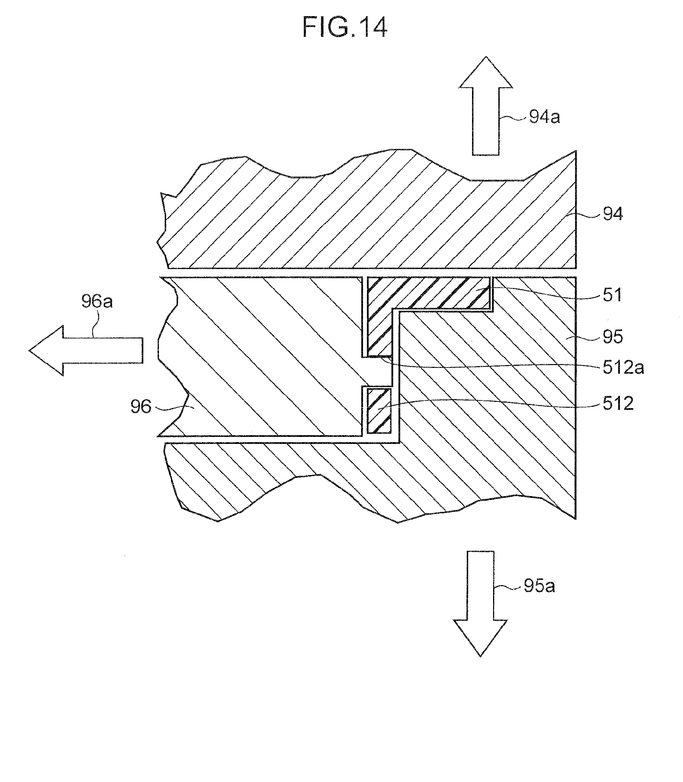

Here, Fig. 14 shows a state during molding of the rear frame 51 (for the sake of convenience, the illustration is inverted vertically). In structural terms, no members are formed on the frames 51, 52 which project in the front/rear direction (optical axis direction), and more specifically, in a direction perpendicular to the die separation direction. Consequently, the die which is used to mold the frame 51 comprises a fixed core 94 and a movable core 95 which can be moved toward and away from the fixed core 94 in the separation direction, as well as comprising a sliding core 96 which is movable in a direction perpendicular to the separation direction, and these cores are removed from the die in the directions of arrows 94a, 95a, 96a. In order to form the engaging recess sections 512a and the engaging projections 512b, as shown in Fig. 14, by forming these elements in an external sliding core 96, the movable core 95 can be removed from the die in the direction of the arrow 95a, in other words, the front/rear direction (optical axis direction).

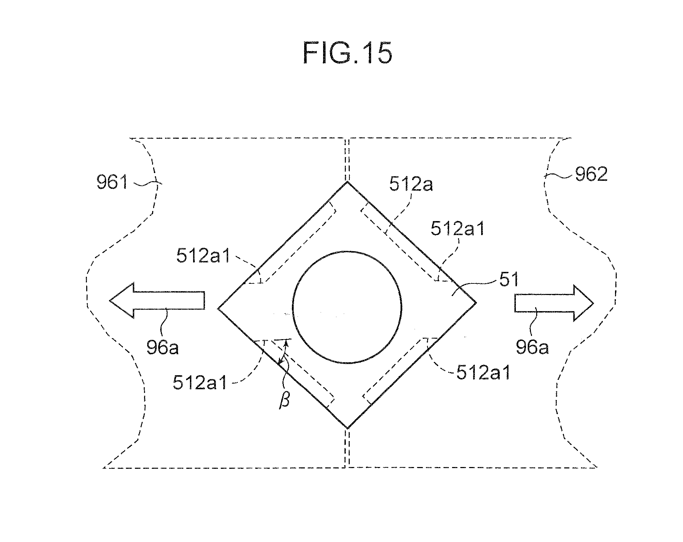

Thereupon, as shown in Fig. 15, if the side faces of the frames 51, 52 are formed by left and right two-surface sliding cores 961, 962, then a tapered surface following the separation direction 96a is formed as indicated by the reference numeral 512a1, in the portion that forms the engaging recess sections 512a and engaging projections 512b, this being a portion that catches during separation from the die. The angle β of the tapered surface 512a1 with respect to the side faces of the frames 51, 52 is no more than 45°. By this means, it is possible to form recesses and projections in the side faces of the frames 51, 52, by means of the left and right two-surface sliding cores 961, 962 (in the front view diagram of the rear frame 51 shown in Fig. 11(D), the installation recess sections 518, 519 corresponding to the external connection terminals 46, 47 are shown in particular).

By adopting a composition of this kind, die separation is performed easily, and a box object without through holes can be formed in the side walls 512, 521 as described above, without employing a central core in the die structure, infiltration of dirt can be prevented, and the rigidity of the frames 51, 52 can be improved.

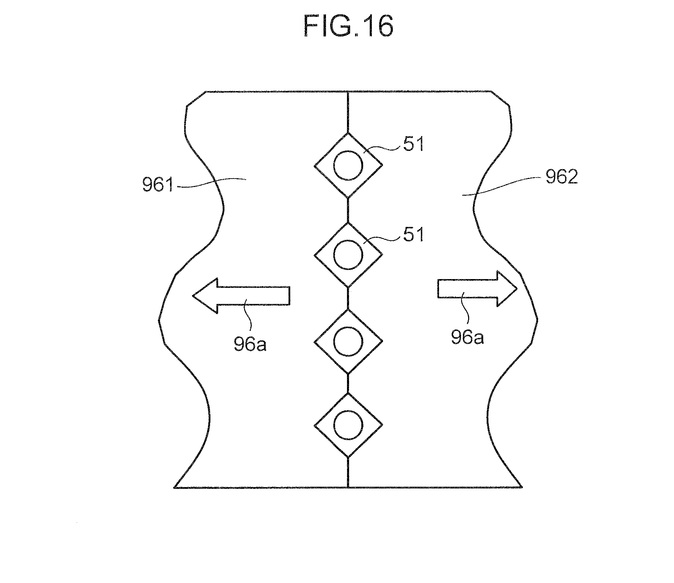

Fig. 16 shows an example where a plurality of frames 51 (in the example in Fig. 16, four frames) are formed using sliding cores 961, 962 as shown in Fig. 15. In this way, since recesses and projections can be formed in the side faces of frames 51, 52 by the left and right two-surface sliding cores 961, 962 only, the molded items (frames 51, 52) can be molded in close proximity to each other, the component yield rate is improved and costs can be reduced.

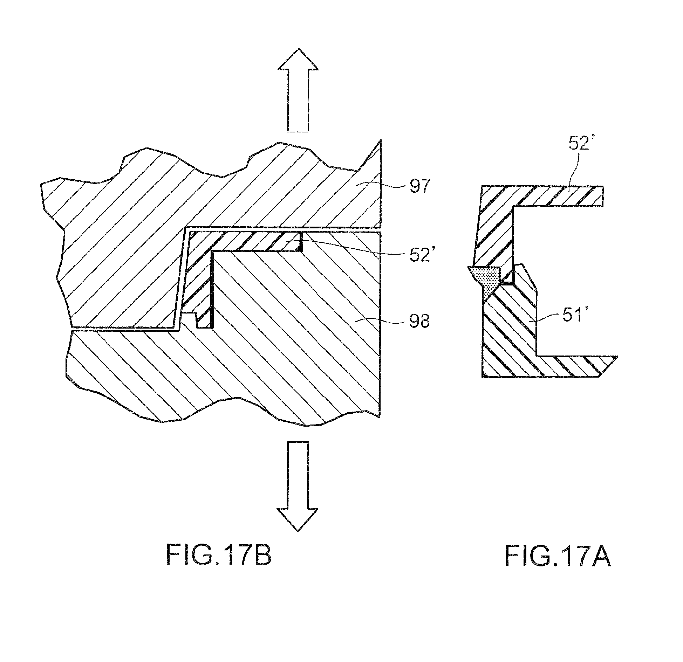

As shown in Fig. 17(A), if the frame 52' and the front frame 53 (not illustrated) are fixed to the frame 51' by bonding, then there are no recesses and projections in the side faces of the frames 51', 52' and it is possible to mold the items just with the cores 97, 98 which separate in the front/rear directions as shown in Fig. 17(B), which means that the component yield rate can be improved yet further.

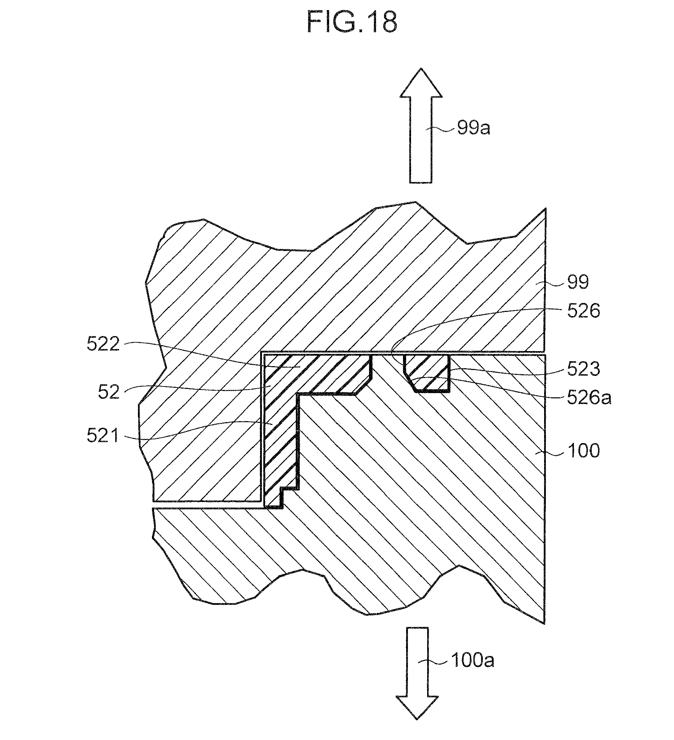

On the other hand, Fig. 18 shows as aspect of molding of the front frame 52. The fitting hole 526 for the rod 42 is formed in the front surface plate 522 of the front frame 52. This fitting hole 526 is formed by a movable core 100 and a taper 526a is formed in the outer perimeter of the fitting hole 526 in the side which forms the rear surface of the front surface plate 522. Consequently, when the fixed core 99 is fastened in the die and molding is carried out, even if touch burring (bearding) is formed, this occurs on the outer surface side of the front frame 52.

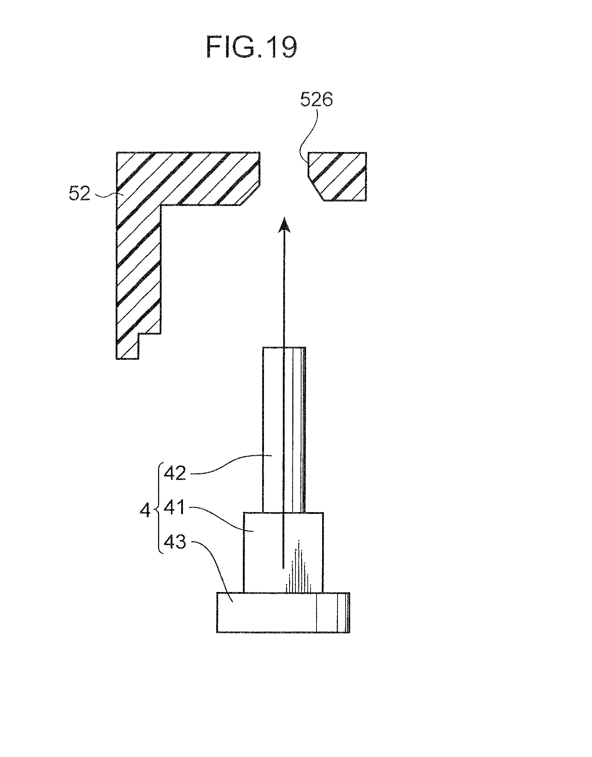

Consequently, when a rod 42 is fitted into the fitting hole 526 as shown in Fig. 19, the burring has no effect, and the burr does not enter inside the airtight frames 51, 52 or gouge into the engaging section 243 of the moving member 24. Consequently, the ultrasonic linear actuator 4 is able to perform a smooth movement. Moreover, since the rod 42 only needs to be fitted into one fitting hole 526 and a taper 526a is formed on the entrance to the hole, then the rod 42 can be assembled easily.

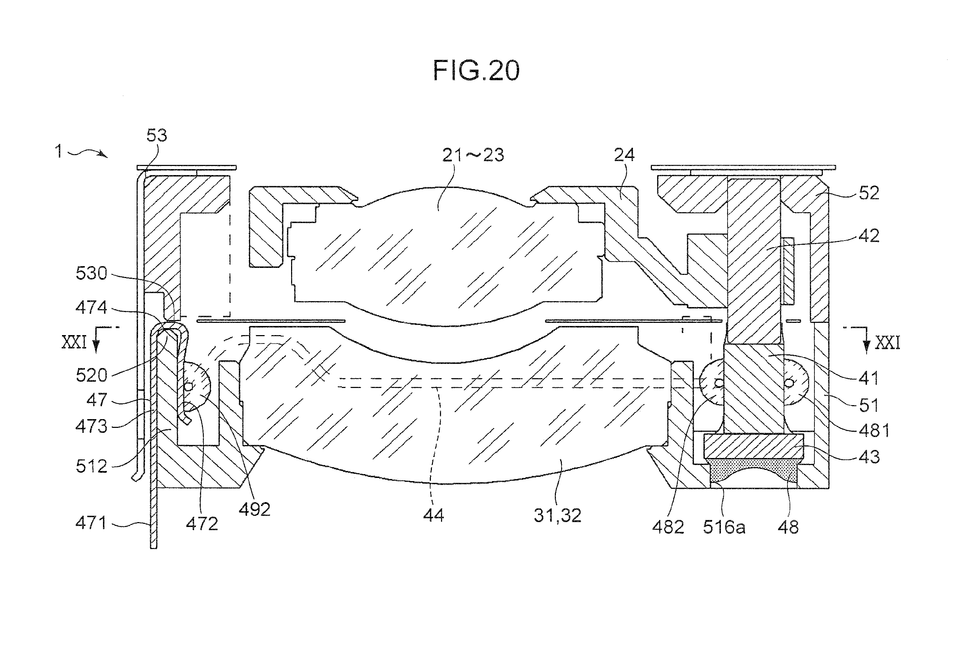

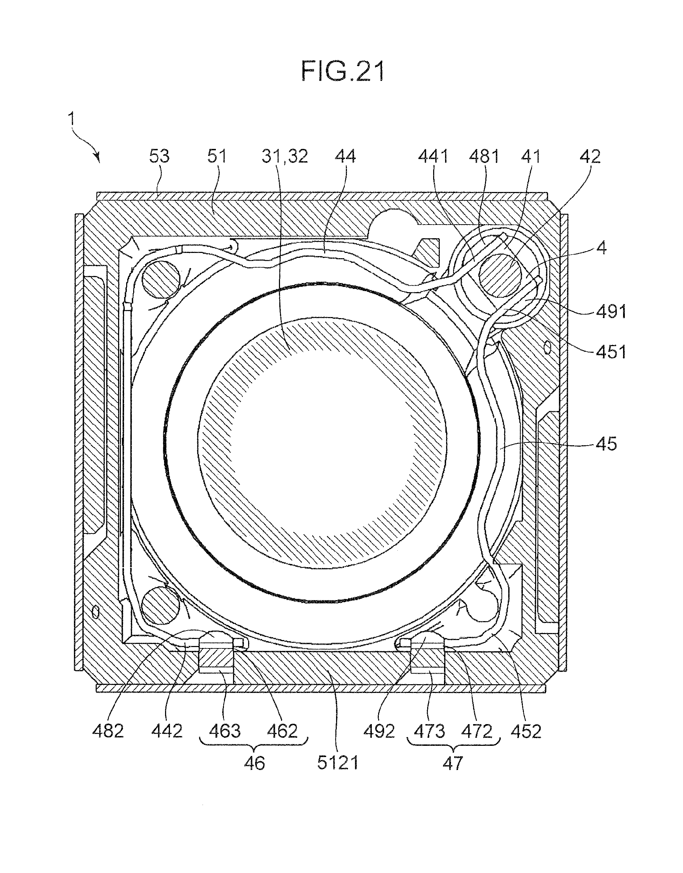

Furthermore, Fig. 20 and Fig. 21 are diagrams for describing the extraction of the lead wires 44, 45; Fig. 20 is a cross-sectional diagram along image pickup device 1 and Fig. 21 is a cross-sectional diagram viewed along the line XXI - XXI in Fig. 20. In Fig. 20 and Fig. 21, the lead wires 44, 45 are soldered. The present embodiment involves innovation in the installation structure of the external connection terminals 46, 47, and the extraction of the lead wires 44, 45 to the ultrasonic linear actuator 4, in the composition of the frames 51, 52 described above.

More specifically, firstly, one end 441, 451 of each of readily deformable individual lead wires 44, 45 which are laid inside the frames 51, 52 is soldered respectively to the electrodes 411, 412 of the piezoelectric element 41 in the ultrasonic actuator 4, as indicated by reference numerals 481, 491. The other ends 442, 452 of the lead wires 44, 45 are soldered respectively to the external connection terminals 46, 47, as indicated by the reference numerals 482, 492.

Here, the external connection terminals 46, 47 are formed from plate metal in a J shape, broadly speaking, as shown in Fig. 3 and Fig. 20, and the other ends 442, 452 of the lead wires 44, 45 are respectively soldered to the short pieces 462, 472 of the J shapes. Furthermore, the front ends 461, 471 of the long pieces 463, 473 of the J shapes are electrically connected to an external substrate, or the like, or are fitted into a connector, or the like.

On the other hand, as described above, the frames 51, 52 which accommodate at least the first group unit 2, the second group unit 3 and the ultrasonic linear actuator 4 are formed as a box object divided into two parts, and the curved portions 464, 474 of the external connection terminals 46, 47 are gripped by projecting surfaces 519, 529 of the frames 51, 52 which are divided into two parts, in addition to which the side walls 512 of the frame 51 are fixed by being sandwiched by the inner circumferential surfaces 465, 475 of the J shape, due to the elastic force of the plate metal of the external connection terminals 46, 47.

By adopting a composition of this kind and using inexpensive, highly generic components in a composition for driving the ultrasonic linear actuator 4, such as the external connection terminals 46, 47 and lead wires 44, 45, it is possible to achieve lower costs compared to insert molding. Moreover, the thickness of the side walls 512 of the frame 51 may be a minimum, and furthermore, the method of connecting the lead wires 44, 45 to the electrodes 411, 412 of the ultrasonic linear actuator 4 may be a simple soldering method, the projected surface area of the soldered portions indicated by reference numerals 481, 491 can be reduced, and the size of the device can be reduced. Additionally, by metal external connection terminals 46, 47 which are made of metal to achieve free wiring of the lead wires 44, 45, good accuracy can be achieved when terminals are sandwiched between the projecting surfaces 520, 530 of the frames 51, 52, compared to a flexible substrate, and therefore good airtightness can be maintained and infiltration of dirt is not liable to occur.

Furthermore, using an ultrasonic linear actuator 4 as stated above as the drive mechanism of the first group unit 2 is not only suitable for achieving small size dimensions, but also, by applying a square wave to the piezoelectric element 41 from the drive mechanism, as described above, only two terminals (electrodes) are necessary, as indicated by reference numerals 411, 412. Therefore, even if lead wires 44, 45 are used as independent external connection terminals 46, 47 as described above, the required number of terminals and the number of wires is a minimum, and this is particularly appropriate in a composition such as that described above.

Furthermore, since the first and second group units 2, 3, of the lenses are arranged in the centre of the square-shaped frames 51, 52, and the ultrasonic linear actuator 4 is disposed in a corner portion of the frames 51, 52, then by providing the external connection terminals 46, 47 on the side walls 5121 which are not adjacent to the ultrasonic linear actuator 4, of the four side walls 512, it is possible to arrange the external connection terminals 46, 47 and the ultrasonic linear actuator 4 in substantially a most distant fashion in the projected plane of the image pickup device 1. By this means, in the image pickup device 1 having a composition of this kind, when fixing the ultrasonic linear actuator 4, the effects of the width of the lead wires 44, 45 is minimized and hence optical characteristics can be guaranteed readily.

Furthermore, it is possible to drive the device by means of two electrodes 411, 412, and if the ultrasonic linear actuator 4 having electrodes 411, 412 arranged on opposing surfaces of the piezoelectric element 41 is used and arranged in a corner portion of the frames 51, 52, then as shown in Fig. 21 and Fig. 3, the two lead wires 44, 45 are extracted in respectively opposite directions from the ultrasonic linear actuator 4 to arrive at their corresponding external connection terminals 46, 47, and this fact can be utilized to form the lead wires 44, 45 as bare wires which do not have an insulating coating. Consequently, in the image pickup device 1 having a composition of this kind, a coating removal step is not required in the soldering process, the assembly operation is simplified, operability is improved, and when fixing the ultrasonic linear actuator 4, the width of the lead wires 44, 45 is further reduced due to the absence of coating and optical characteristics can be guaranteed more readily.

Moreover, by extracting the lead wires 44, 45 about the periphery of the second group unit 3, which is a fixed lens group, it becomes unnecessary to ensure a dedicated space for extracting the lead wires 44, 45, and in an image pickup device 1 having a composition of this kind, it is possible to improve space efficiency and to achieve reduction in size. Furthermore, since the lead wires 44, 45 are extracted about the periphery of the second group unit 3, which is a fixed lens group, then in the image pickup device 1 having a composition of this kind, there is no risk of operational error of the first group unit 2, which is a movable lens group, and furthermore, there is little possibility of problems, such as disconnection of the actual lead wires 44, 45, and reliability can be improved.

Moreover, since the lead wires 44, 45 are distanced from the space where the first group unit 3, which is the movable lens group, is disposed, by means of the light shielding plate 33 that is intended to cut out the incidence of harmful light rays to the lens, then it is possible to prevent contact between the first group unit 2 and the lead wires 44, 45, and reliability can be improved.

Furthermore, in the case of using a base material which has relatively poor wetting properties in respect of solder, such as stainless steel, for the external connection terminals 46, 47, the front tip portions 461, 471 of the short pieces 462, 472 of the J shape and the long pieces 463, 473 of the J shape where the aforementioned soldering is performed, are subjected to one of solder plating, gold plating, silver plating, nickel plating, and zinc plating, so as to improve the solder wetting properties. Therefore, by adopting a composition of this kind, it is possible to obtain good conductivity in the soldered portions, as well as being able to prevent interference with other components due to unwanted flowing of solder outside of the portions which are to be soldered, and improving reliability.

Moreover, desirably, the external connection terminals 46, 47 are made of a material having magnetic properties. By this means, it becomes easier to install (suction) the parts in the jig for soldering, and workability can be improved. In the present embodiment, austenite stainless steel (SUS304) is used for the external connection terminals 46, 47. Austenite stainless steel is generally a non-magnetic material, but in the present embodiment, the slight magnetic properties caused by the bending process are utilized. It is also possible to use ferrite stainless steel, which is a magnetic material, for the external connection terminals 46, 47. It is also possible to use a material having magnetic properties as described above as a base material, and to apply a plating process to the portions where soldering is to be performed, as stated previously.

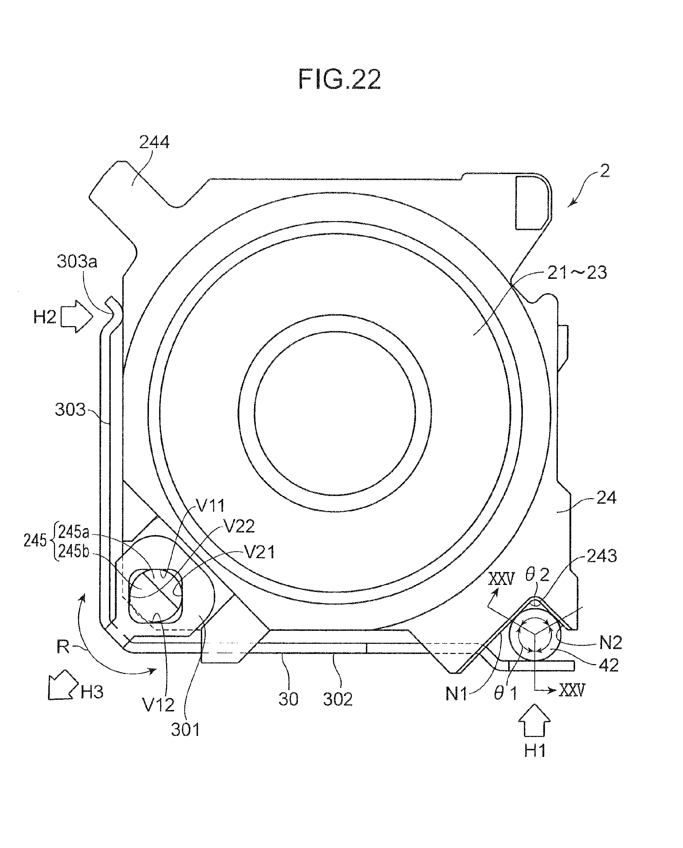

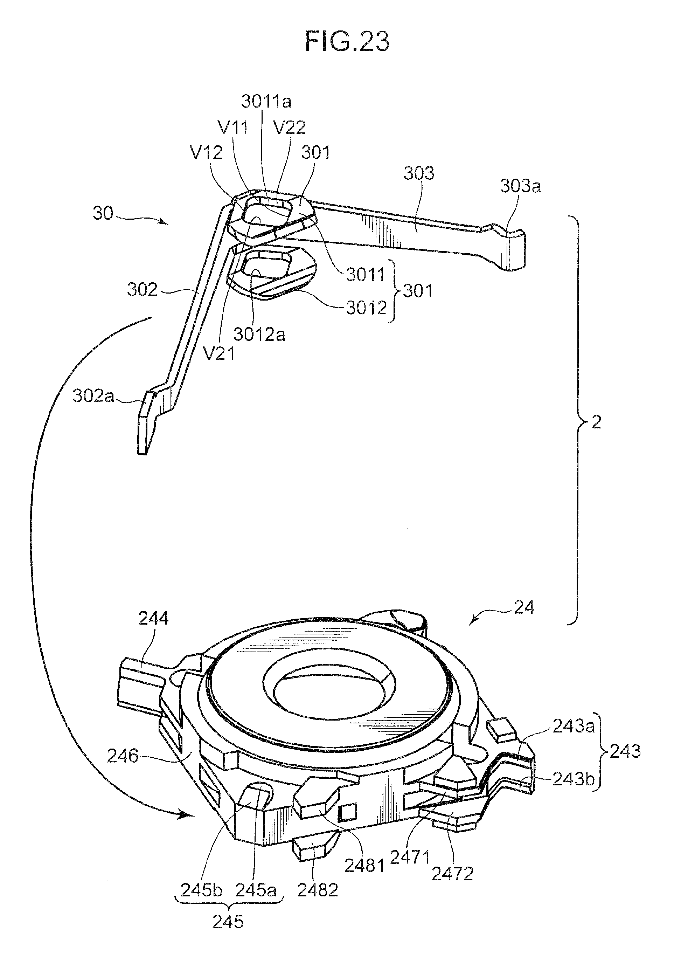

Next, the holding structure of the first group unit 2 will be described. Fig. 22 is a front view diagram of a first group unit 2, and Fig. 23 is an exploded perspective diagram of same. Fig. 22 also shows the rod 42 of the ultrasonic linear actuator 4. This first group unit 2 is composed by assembling a pressing member 30 on a holding member 24 that holds the optical elements 21 to 23, and the like, which are butt joined as described above, and forms a moving body which is moved in the axial direction of the rod 42. The pressing member 30 pushes the rod 42 against the holding member 24, which is the main part of the moving body, and causes the holding member 24 to engage with the rod 42 with a prescribed frictional force.

The holding member 24 is formed in a substantially square shape, and the region of one corner portion thereof forms an engaging section 243 with the rod 42 of the ultrasonic linear actuator 4 which is disposed in the vicinity of the corner portion, while the vicinity of the diagonally opposing corner portion forms a guide piece 244. The guide piece 244 is fitted in between a pair of guide walls 517, 527 (see Figs. 11 and 12) on the frames 51, 52, thereby impeding rotation of the holding member 24 about the rod 42 while permitting movement in the axial direction of the rod 42. On the other hand, a front and rear pair of bosses 245 which form an engaging section of the pressing member 30 are erected in one of the corner portions which are adjacent to the engaging section 243.

On the other hand, the pressing member 30 is formed in a substantially open V shape in which a plate spring member having elastic properties is bent in substantially the central portion by plate metal processing, and the bending point of the V shape, which is in a substantially central position, forms an engaging section 301, which engages with the boss 245 in a rockable fashion as indicated by the reference symbol R. In this pressing member 30, the two edges of the V shape are used as a plate spring member, and the front end of one edge 302 becomes a pressing section 302a which presses the rod 42 in the direction of arrow H1, while the front end of the other edge 303 abuts against the abutting section 246 of the holding member 24, and becomes a receiving section 303a which receives a reaction in the direction of arrow H2 generated by the pressing section 302a pressing the rod 42.

By adopting a composition of this kind, even if the pressing member 30 is supported in substantially the central portion, it is possible to display elastic properties through substantially the whole length of the pressing member 30, beyond the rocking fulcrum thereof (the engaging section 301), and the length from the point of effort of the pressing member 30 (the receiving section 303a) to the point of action (the pressing section 302a) can be made long.

Here, in general, the amount of distortion of a plate spring member is directly proportional to the cube of the distance from the fixed point to the point of action, and is proportional to the magnitude of the force. Therefore, in the case of a plate spring of which one end is fixed to the holding member and the other end presses the rod, as used commonly in the prior art, taking the distance from the fixed point to the pressing point as L and taking the generated force as F, the amount of distortion y is expressed by:

$$y = L^3 \times F/(3EI) \quad \text{(I: second moment of area, E: Young's modulus)}.$$

On the other hand, in the case of the present embodiment, if the distance from the fixed point (engaging section 301) to the point of action (pressing section 302a) is taken as L, similarly, and the distance from the fixed point (engaging section 301) to the reaction supporting portion (receiving section 303a) is taken as L1, then the amount of distortion y1 produced when the same force F is generated will be:

$$y1 = (L^3 + L1^2 \times L) \times F/(3EI).$$

Therefore, comparing y and y1, since $L1^2$ is a positive value, then y1 is larger than y by an additional amount of ($L1^2 \times L$). Consequently, in the case of the present embodiment, for the same change in the amount of distortion of the plate spring member, a smaller change is produced in the amount of force, in other words, the frictional force (holding force) F of the moving body with respect to the rod 42, in accordance with the increase in the aforementioned distance. In this way, the spring sensitivity of the pressing member 30 is reduced, variation in the frictional force (holding force) on the ultrasonic linear actuator 4 is restricted, and the driving performance can be stabilized.

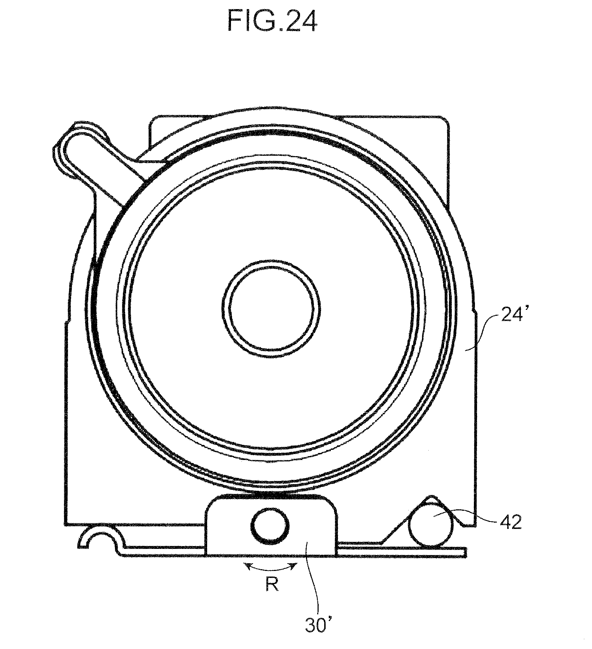

Furthermore, if substantially the central portion of the pressing member formed of a plate spring member is supported in a rockable fashion, then as indicated by the pressing member 30' shown in Fig. 24, it is possible to employ a straight plate spring member in accordance with the component layout peripheral to the holding member 24', and the like. However, by using a open V-shaped plate spring member such as the pressing member 30 which substantially spans two edges of the holding member 24 which is formed substantially in a square shape, it is possible to increase the length of the plate spring member exerting elastic properties, and the spring sensitivity can be further reduced.

What is more, the engaging section 301 of the pressing member 30 which engages with the holding member 24 is provided with a pair of engaging pieces 3011, 3012 which sandwich the plate-shaped holding member 24 in the thickness direction (front/rear direction), and engaging holes 3011a, 3012a formed in these engaging pieces 3011, 3012 respectively engage with the pair of bosses 245 erected at the front and rear of the holding member 24. By this means, the pressing member 30 is supported rockably as indicated by reference numeral R, as described previously. The bosses 245 are formed in a pillar shape having a curved surface, such as a round bar shape, and the engaging holes 3011a, 3012a are formed in a square shape in which the bosses can fit loosely; the opposing pairs of edges of this square shape V11, V12 and V21, V22 are arranged respectively in parallel with the edge 302 of the pressing member 30 on the pressing section 302a side and the other edge 303 thereof on the receiving section 303a side.

Consequently, when the pressing member 30 exerts an elastic force and a force acts in a direction to close the V shape, in other words, a force acts in a direction to remove the bosses 245 from the engaging holes 3011a, 3012a, as indicated by reference numeral H3, then the round bar-shaped bosses 245 abut against the two adjacent edges V11, V21 of the square-shaped engaging holes 3011a, 3012a. By this means, even if the allowable error of the bosses 245 and the engaging holes 3011a, 3012a is relaxed (for example, if there is a certain amount of deviation therebetween or distortion in the shapes thereof), the pressing member 30 is still able to exert a stable elastic force.

Furthermore, since the pressing member 30 is installed by mutually engaging projections and recesses with the holding member 24, then separate components for installation become unnecessary, and assembly can be carried out readily, in addition to which a stable rocking action can be achieved by sandwiching the holding member 24 between the pair of engaging pieces 3011, 3012. Moreover, the bosses 245 have a round bar shape on the inner side 245a of the holding member 24 and an inclined guiding surface on the outer side 245b, whereby assembly can be carried out readily while preventing the engaging pieces 3011, 3012 from escaping from the bosses 245. It is also possible to form the bosses 245 on the engaging pieces 3011, 3012 and to form the engaging holes 3011a, 3012a in the holding member 24.

Furthermore, a pair of restricting members 2471, 2472 are provided in the holding member 24 in the vicinity of the ultrasonic linear actuator 4 to restrict the movement of the pressing section 302a of the pressing member 30 in the axial direction of the rod 42 after engaging with the rod 42 of the ultrasonic linear actuator 4. Similarly, a pair of restricting members 2481, 2482 are provided on the side of the engaging section 301.

By adopting a composition of this kind, in the pressing member 30 which is made of a plate spring member, there is a possibility that the edge 302 from the engaging section 301 to the pressing section 302a may twist or deform with movement of the holding member 24, due to the pressing section 302a engaging with the rod 42 of the ultrasonic linear actuator 4, but by providing the pairs of restricting members 2471, 2472 and 2481, 2482 which hold the edge 302 from either side in the direction of movement, this twisting and bending is suppressed and variation in the frictional force (holding force) F of the ultrasonic linear actuator 4 can be restricted.

In the example described above, pairs of restricting members 2471, 2472 and 2481, 2482 which hold the edge 302 from either side of the movement direction are used as members for restricting movement of the edge 302, but it is also possible, for example, to form one engaging hole in the edge 302 and to use a pin, or the like, which fits loosely into this engaging hole.

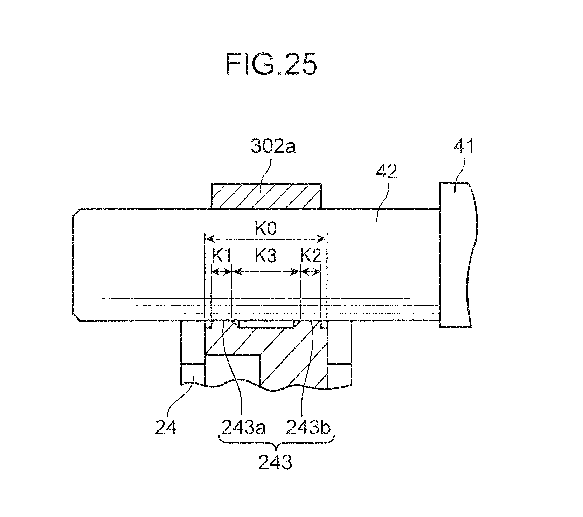

Next, the structure of the engaging portion of the first group unit 2 with the rod 42 will be described. Fig. 25 is a cross-sectional diagram of this engaging portion, as viewed along line XXV - XXV in Fig. 22. Referring additionally to Fig. 22 and Fig. 23, the rod 42 is formed in a round bar shape, and in the engaging section 243 which is the abutting section of the holding member 24 against the rod 42, two V-shaped contacting pieces 243a, 243b are provided at an interval apart in the axial direction of the rod 42.

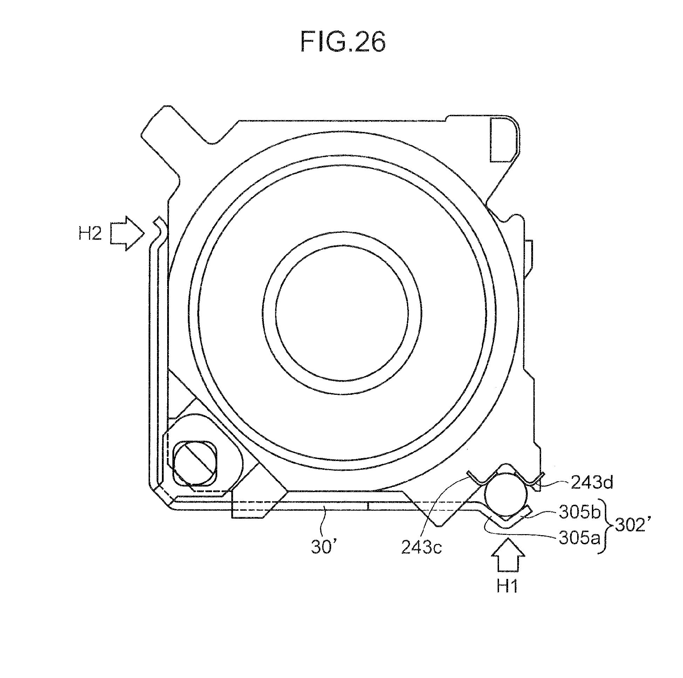

The contacting pieces 243a, 243b may be formed in a continuous V shape so as to surround the outer periphery of the rod 42, or the contacting pieces 243a, 243b may be constituted by tips at four points which actually make contact with the rod 42, as in the contacting pieces 243c, 243d in Fig. 26. Furthermore, since the opposite side is bordered by the pressing member, then the contacting pieces should be arranged at a interval of less than 180° apart in the circumferential direction of the rod 42. Furthermore, the rod 42 should be a circular bar shape, rather than a square bar shape, and the cross-sectional shape perpendicular to the axis may be circular or elliptical.

Moreover, the V-shaped contacting pieces 243a, 243b or the individual contacting pieces 243c, 243d slide over the rod 42, and therefore are desirably formed using a material such as liquid crystal polymer (LCP) or polyphenylene sulfide resin (PPS) with an additive to give increased hardness. For the additive, it is desirable to use glass fibers, carbon fibers, titanium oxide, or potassium titanate. The polyphenylene sulfide resin and liquid crystal polymer have good fluidity and are suitable for high-precision molding, and by using an additive to increase the hardness, it is possible to improve the drive performance (speed).

By adopting a composition of this kind, viewed in a projected plane from the front surface, as shown in Fig. 22, the rod 42 is supported at three points, including the pressing member 30. Consequently, even if there is slight deviation in the relative positions of the holding member 24 and the pressing member 30, the pressing member 30 exerts a substantially equal pressing force on the rod 42 to that of the contacting pieces 243a, 243b, on the opposite side to the contacting pieces 243a, 243b. Therefore, compared to surface contact or contact on a pair of lines, as in a case where the engaging section 243 is a U groove or a V groove which is continuous in the axial direction of the rod 42, by adopting contact at four points, greater tolerance is obtained in respect of fluctuations in the engaging section 243 due to the molding or processing steps, variation in the force of friction (holding force) of the holding member 24 is suppressed and the drive performance can be stabilized.

Desirably, the lengths in the axial direction of the portions of the contacting pieces 243a, 243b which contact the rod 42, in other words, the contact lengths K1, K2, is equal to or less than 1/3 of the width K0 of the engaging section 243, and therefore the interval K3 between the two contacting pieces 243a, 243b is set to be no less than 1/3. By adopting a composition of this kind, the contacting pieces 243a, 243b make point contact with the rod 42 and the beneficial effects described above can be improved.

Moreover, as shown in Fig. 22, it is possible to adopt an arrangement whereby the interval θ1 between the contact points of the pair of contacting pieces 243a, 243b is 120° in the circumferential direction, in other words, the angle θ2 of intersection between the tangents N1, N2 to the pair of contact points is 60°. In this case, by forming the pressing section 302a of the pressing member 30 as a flat plate spring, as stated previously, the three points in the cross-section perpendicular to the axis are substantially separated by 120°, and the pressing force from the pressing member 30 can be applied uniformly at the contact points of the pair of contacting pieces 243a, 243b.

Furthermore, as shown in Fig. 26, a pressing section 302a' of the pressing member 30' may also be formed as a V-shaped plate-shaped body in a cross-section perpendicular to the axis. In this case, the pressing section 302a' abuts against the rod 42 in two lines. Therefore, the pressing force can be distributed.

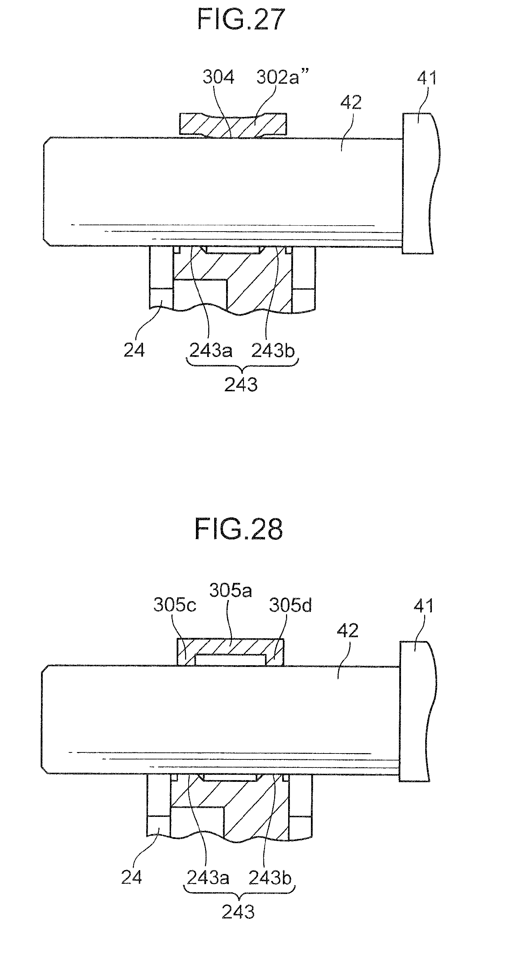

Moreover, it is also possible to form the central portion of the rod 42 in the axial direction to protrude as indicated by the pressing section 302a" of the Fig. 27, so as to form a contacting section 304 which actually contacts the rod 42. By forming a point contact on the side of the pressing section 302a" also in this way, it is possible to apply a substantially uniform pressing force to the two contacting pieces 243a, 243b which are provided at an interval apart in the axis direction of the rod 42.

Alternatively, by forming the contacting section 304 as a rib rather than a point (projection) and setting the contact length thereof to be no more than 1/2 of the width of the pressing section 302a'', it is possible to apply a substantially uniform pressing force to the two contacting pieces 243a, 243b, as well as reducing the pressing force per unit surface area and also improving wear due to friction.

Furthermore, in the pressing section 302a' having an open V shape as shown in Fig. 26, two contacting pieces 305c, 305d may be provided respectively at an interval apart in the axial direction of the rod 42 respectively on a pair of contacting pieces 305a, 305b, as shown in Fig. 28. In this case, the outer circumferential surface of the rod 42 is supported at four points on the holding member 24 side and at four points opposing these on the pressing section 302a' side. By this means, it is possible to reduce the pressing force per unit surface area and to improve the wear due to friction.

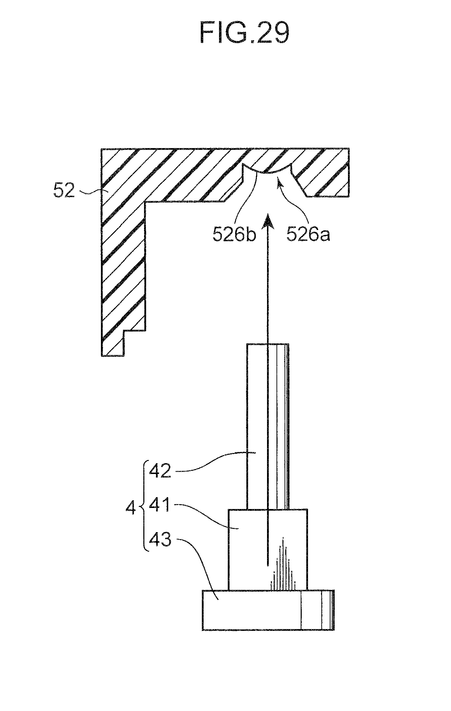

In the embodiment described above, a fitting hole 526 which is a through hole is formed in the front frame 52, the front end portion 42a of the rod 42 of the ultrasonic linear actuator 4 is inserted into this fitting hole 526, and the tilt is adjusted by abutting the front end portion 42a of the rod 42 against a spherical abutting portion 922a of a positioning pin 922, but as shown in Fig. 29, instead of the fitting hole 526, it is also possible to form a fitting recess section 526a having a convex spherical receiving section 526b in the bottom portion thereof, in the front frame 52 and to fit the rod 42 by abutting the front end portion 42a of the rod 42 against the receiving section 526b. By adopting a composition of this kind, the centre of the front end portion 42a of the rod 42 makes a point contact with the receiving section 526b and the tilt adjustment can be stabilized. Using a fitting hole 526 which is a through hole enables greater reduction in height than a fitting recess section 526a.

The present specification has disclosed various technologies as described above, of which the main technologies are summarized below.

The image pickup device according to one aspect comprises: an ultrasonic linear actuator in which a rod is connected to one end of a piezoelectric element that expands and contracts in an axial direction, the rod moving reciprocally with expansion and contraction of the piezoelectric element; a moving lens group which is moved in an optical axis direction by engaging with the rod with a prescribed force; and a frame which accommodates at least the moving lens group and the ultrasonic linear actuator; wherein the frame comprises: a first supporting section, provided on one of a front end or a rear end and having a first fitting section into which a first end section being a front end portion of the rod of the ultrasonic linear actuator is fitted, and which supports the first end section in such a manner that the ultrasonic linear actuator can tilt in a prescribed range; a second supporting section, provided on the other of the front end or rear end, in the vicinity of a second end section which is on an opposite side of the ultrasonic linear actuator to the first end section; and an adhesive layer which fixes the second end section and the second supporting section to each other, after a position of the second end section of the ultrasonic linear actuator is adjusted with respect to the second supporting section in such a manner that an optical axis of the moving lens group and an element surface of an image pickup element are perpendicular to each other.

The method for manufacturing an image pickup device according to a further aspect comprises: a step in which a first supporting section is provided on one of a front end or a rear end of a frame that accommodates at least an ultrasonic linear actuator in which a rod is connected to one end of a piezoelectric element that expands and contracts in an axial direction, the rod moving reciprocally with expansion and contraction of the piezoelectric element, and a moving lens group which is moved in an optical axis direction by engaging with the rod with a prescribed force; a first end section, which is a front end portion of the rod of the ultrasonic linear actuator, is fitted into a first fitting section provided in the first supporting section; and the first end section is supported in such a manner that the ultrasonic linear actuator can tilt in a prescribed range; a step in which a second supporting section is provided on the other of the front end or rear end of the frame, in the vicinity of a second end section which is on an opposite side of the ultrasonic linear actuator to the first end section, and a position of the second end section is determined with respect to the second supporting section in such a manner that an optical axis of the moving lens group and an element surface of an image pickup element are perpendicular to each other; and a step in which adhesive is filled in between the second end section the position of which has been determined and the second supporting section.

According to the composition described above, an innovation is made in the installation of an ultrasonic linear actuator on a frame, in an image pickup device in which a lens group that moves in an optical axis direction is provided for the purpose of autofocus and zoom, the expansion and contraction of a piezoelectric element is transmitted to a rod, and an ultrasonic linear actuator is used to move the moving lens group which is engaged with the rod by a prescribed frictional force, by utilizing the speed difference between expansion and contraction of the piezoelectric element. In other words, the rod of the ultrasonic linear actuator is received on the frame at one axle fitting position, and by using this fitting position as a rocking fulcrum point, the tilt of the moving lens group is adjusted with respect to a reference surface of the image pickup element so as to improve imaging performance, in which state the end portion of the ultrasonic linear actuator is bonded and fixed to the frame. By this means, it is possible to adjust the optical axis of the moving lens group and the element surface of the image pickup element so as to become a perpendicular angle (a tilt angle of zero).

More specifically, a first supporting section and a second supporting section are provided on a frame which accommodates at least the moving lens group and the ultrasonic linear actuator (and may include an image pickup element, and the like), the first supporting section being disposed on one of the front end side (object side) or rear end side (image side) of the frame, and the second supporting section being disposed on the other of the front end side or rear end side. The first supporting section has, at one of the front end or rear end side, a first fitting section into which a first end section being a front end portion of the rod of the ultrasonic linear actuator is inserted, and which supports the first end section slidably in accordance with expansion and contraction of the piezoelectric element and in such a manner that the ultrasonic linear actuator can tilt within a prescribed range. Furthermore, the second supporting section is disposed in the vicinity of a second end section, which is on the opposite side of the ultrasonic linear actuator from the first end section, at the other of the front end or rear end side. The position of the second end section is adjusted with respect to the second supporting section in such a manner that the optical axis of the moving lens group and the element surface of an image pickup element are perpendicular, and the second end section and the second supporting section are then bonded and fixed together by an adhesive layer. This positional adjustment is achieved by, for example, providing a reference surface which is perpendicular to the optical axis of the moving lens group, on a holding member which holds the moving lens group, providing an installation reference surface which is a reference for installation of the image pickup element on the frame, and performing adjustment in such a manner that the reference surface and the installation reference surface are parallel to each other.

Consequently, according to the composition described above, it is possible to adjust the angle of installation of the ultrasonic linear actuator on the frame, and the tilt accuracy of the moving lens group can be improved independently of the component accuracy. Furthermore, since only the front end side of the rod of the ultrasonic linear actuator is supported by the first supporting section, then broadly speaking, the length of the rod can be restricted to the length of the portion supported by the first supporting section plus the movement length of the moving lens group. More specifically, in the prior art, there are two axle supporting portions, but only one is required here and therefore the height of the device can be reduced in accordance with the fitting length of the axle.

Moreover, in a further aspect, desirably, in the image pickup device described above, the frame is constituted by molded parts having a shape obtained by dividing a box object into two parts on a front side and a rear side in the optical axis direction, and side walls of the box object are formed in a shape which has no through holes; a front side frame and a rear side frame are formed by the division into two parts on the front side and the rear side, either one of a front end surface of the front side frame and a rear end surface of the rear side frame is formed with the first fitting section and serves as the first supporting section, and the other of the front end surface and the rear end surface is formed with an adjustment hole on a rear surface side of the second end section so as to expose the second end section and serves as the second supporting section; and the adhesive layer is formed and the adjustment hole is sealed by filling adhesive via the adjustment hole.

According to the composition described above, a frame which accommodates at least the moving lens group and the ultrasonic linear actuator (and also possibly an image pickup element and the like) and which constitutes the general external shape of the image pickup device is formed in the shape of a box object which is divided into two parts on the front side and the rear side in the optical axis direction. Moreover, the frame is constituted by molded parts made of resin, or the like, and the side walls of the box object are formed in a shape which does not have through holes. The first end section of the ultrasonic linear actuator is held by one of the front end surface of the front (object) side frame and the rear end surface of the rear (image) side frame, and the second end section is held by the other thereof.

Therefore, since the side walls of the frame are formed in an airtight shape, in other words, a shape without holes, then it is possible to prevent infiltration of dirt, as well as raising the rigidity of the frame, for instance, the resistance to pushing from the front surface, and thus making it possible to prevent destruction of the ultrasonic linear actuator as a result of pressure applied to the frame. Furthermore, the first fitting section which is formed in order to hold the ultrasonic linear actuator is sealed by the rod, in addition to which the adjustment hole is sealed with adhesive, and therefore it is possible to prevent infiltration of dirt via these parts. Moreover, since the first fitting section is sealed, then the molded parts do not need to be formed thickly, and further height reduction can be achieved.

Moreover, in a further aspect, desirably, in the image pickup device described above, the first fitting section is a through hole, which is sealed by fitting of the front end portion of the rod thereinto. Moreover, in a further aspect, desirably, in the image pickup device described above, the piezoelectric element has a weight on an end portion thereof on the opposite side from the rod, and the weight is fixed to the second supporting section as the second end portion. Moreover, in a further aspect, desirably, in the image pickup device described above, the adjustment hole is a hole which is narrower than the second end section.

Moreover, in a further aspect, desirably, in the image pickup device described above, the interiors of the front side frame and the rear side frame are formed in a shape having no projecting sections that project in a direction perpendicular to the optical axis direction which is a die separation direction.

According to the composition described above, die separation can be performed easily, and it is possible to form a box object without through holes in the side walls as described above, without employing a central core in the composition of the die. Furthermore, since the front side frame and the rear side frame are molded respectively by two-surface dies, then the component yield rate can be improved and costs can be reduced.

Moreover, in a further aspect, desirably, in the method for manufacturing an image pickup device described above, the frame is formed with an adjustment hole on a rear surface side of the second end section of the ultrasonic linear actuator so as to expose the second end section; and in the step in which adhesive is filled, the second end section is bonded to the second supporting section by filling the adhesive into the adjustment hole.

Moreover, in a further aspect, desirably, in the method for manufacturing an image pickup device described above, a reference surface perpendicular to the optical axis of the moving lens group is provided on a holding member which holds the moving lens group, and an installation reference surface serving as a reference for installation of the image pickup element is provided on the frame; and in the step in which a position of the second end section is determined with respect to the second supporting section, adjustment is performed in such a manner that the reference surface and the installation reference surface are parallel to each other.

Moreover, in a further, desirably, in the method for manufacturing an image pickup device described above, an installation reference surface serving as a reference for installation of the image pickup element is provided on the frame; a lens surface of the moving lens group has a flat portion which is perpendicular to the optical axis; and in the step in which a position of the second end section is determined with respect to the second supporting section, a tilt of the moving lens group is adjusted by moving the second end section of the ultrasonic linear actuator from the adjustment hole in such a manner that reflected light from a surface parallel to the installation reference surface and reflected light from the flat portion are parallel to each other according to an autocollimator.

Moreover, in a further aspect, desirably, the method for manufacturing an image pickup device described above further comprises a step of installing the image pickup element on the frame, wherein, in the step in which a position of the second end section is determined with respect to the second supporting section, a captured image from the image pickup element is monitored and a tilt of the moving lens group is adjusted by moving the second end section of the ultrasonic linear actuator from the adjustment hole in such a manner that an image quality of the captured image becomes optimum.

Moreover, in a further aspect, desirably, in the method for manufacturing an image pickup device described above, a weight is provided on another end of the piezoelectric element, and in the step in which adhesive is filled, the adhesive is filled into the adjustment hole and the weight is bonded to the second supporting section.

According to the composition described above, the weight portion of the ultrasonic linear actuator is fixed when the ultrasonic linear actuator is bonded and fixed to the second supporting section. By exposing the rear surface of the weight through the adjustment hole which is formed in the second supporting section and moving the rear surface, for example, it is possible readily to adjust the angle (tilt angle) of the axis of the ultrasonic linear actuator. Moreover, since the adjustment hole is formed to be narrower than the rear surface of the weight, the ultrasonic linear actuator is prevented from falling out of the adjustment hole, and furthermore, if adhesive is filled into the adjustment hole to form an adhesive layer, then the essentially narrow gap between the weight and the second supporting section can be filled in reliably. By this means, the interior of the image pickup device is sealed in an airtight fashion and infiltration of dirt can be prevented.

Moreover, in a further aspect, desirably, in the method for manufacturing an image pickup device described above, the weight is formed to have a larger diameter than the piezoelectric element; the adjustment hole is formed to be narrower than a rear surface of the weight; and in the step in which adhesive is filled, the weight and the second supporting section are bonded to each other by filling adhesive in between the weight and the second supporting section at a peripheral edge of the adjustment hole.

According to the composition described above, in bonding and fixing the ultrasonic linear actuator to the second supporting section, the weight portion of the ultrasonic linear actuator is fixed. By providing the piezoelectric element freely in the second fitting hole which is formed in the second supporting section and moving the weight provided on the rear surface side of the piezoelectric element, for example, it is possible readily to adjust the angle (tilt angle) of the axis of the ultrasonic linear actuator. Moreover, by forming the weight to have a larger diameter than the second fitting hole and forming the adhesive layer by filling adhesive in between the weight and the second supporting section at a perimeter edge of the second fitting hole, it is possible reliably to seal the essentially narrow gap between the weight and the second supporting section. By this means, the interior of the image pickup device is sealed in an airtight fashion and infiltration of dirt can be prevented.

The adjusting jig relating to a further aspect is an adjustment jig for any of the image pickup devices described above, comprising: a first jig which abuts against an image pickup element installation reference surface of the frame and grips the frame; a second jig which abuts against a reference surface of a holding member which holds the moving lens group, the reference surface being perpendicular to an optical axis of the moving lens group, and which adjusts an angle between the optical axis of the moving lens group and an element surface of the image pickup element to a perpendicular angle by suctioning the moving lens group; and adhesive filling means having an ejection port in the vicinity of the second end section of the ultrasonic linear actuator.

According to the composition described above, the rod of the ultrasonic linear actuator is received on the frame at one axle fitting position as described above, and this fitting position can be used as a rocking fulcrum to enable adjustment of the tilt of the moving lens group with respect to the reference surface of the image pickup element. This feature can be utilized to provide a jig in which bonding and fixing of the ultrasonic linear actuator is carried out in conjunction with the tilt adjustment. More specifically, when performing adjustment of an image pickup device in which a moving lens group on a front side is taken as a first group unit, and an image pickup element is disposed after this first group unit, the first jig is abutted against a reference surface of the image pickup element and made to grip the frame, and in this state, the second jig is abutted against the reference surface of the moving lens group and the moving lens group is suctioned. By this means, it is possible to perform adjustment in such a manner that the optical axis of the moving lens group and the element surface of the image pickup element are perpendicular, in other words, the two reference surfaces are parallel to each other. In this state, the ultrasonic linear actuator is fixed to the frame by ejection of adhesive from the adhesive filling means having an ejection port in the vicinity of the second end section of the ultrasonic linear actuator.

Consequently, it is possible to carry out tilt adjustment of the moving lens group and bonding and fixing of the ultrasonic linear actuator to the frame, easily.

In the foregoing description, the ultrasonic linear actuator can be bonded and fixed to the frame after adjusting the tilt of the ultrasonic linear actuator by means of a simple task of moving the rear surface of the piezoelectric element, for example, of the ultrasonic linear actuator, while monitoring a captured image of the image pickup element, in such a manner that the image quality becomes optimum. In this case, it is possible to also cancel out factors which cause performance to deteriorate, apart from the moving lens group, and the required overall performance of the image pickup device can be achieved.

Moreover, in a further aspect, desirably, the adjusting jig described above further comprises a positioning member which abuts against the front end portion of the rod of the ultrasonic linear actuator, the abutting portion having a spherical shape.

According to the composition described above, the front end of the positioning member which receives the front end of the axle in the axle fitting portion between the ultrasonic linear actuator and the frame is formed with a spherical shape. Therefore, the member makes point contact with the centre of the axle and the tilt adjustment can be stabilized.

This application is based on Japanese Patent Application No. 2009-252791, filed on November 4, 2009, the contents of which are incorporated herein.

The present invention has been described suitably and sufficiently by means of an embodiment with reference to the drawings above, but it is recognized that a person skilled in the art could readily change and/or modify the embodiment described above. Consequently, changes or modifications implemented by a person skilled in the art are interpreted as being included in the scope of the claims, provided that such changes or modifications do not depart from the scope of the claims as stated herein.

Industrial Applicability

According to the present invention, an image pickup device, an adjusting jig for same and a method for manufacturing an image pickup device can be provided.

**Claims**

1.  An image pickup device, comprising:

    an ultrasonic linear actuator in which a rod is connected to one end of a piezoelectric element that expands and contracts in an axial direction, the rod moving reciprocally with expansion and contraction of the piezoelectric element;
    a moving lens group which is moved in an optical axis direction by engaging with the rod with a prescribed force; and
    a frame which accommodates at least the moving lens group and the ultrasonic linear actuator,
    wherein the frame includes:
    a first supporting section, provided on one of a front end or a rear end and having a first fitting section into which a first end section being a front end portion of the rod of the ultrasonic linear actuator is fitted, and which supports the first end section in such a manner that the ultrasonic linear actuator can tilt in a prescribed range;
    a second supporting section, provided on the other of the front end or rear end, in the vicinity of a second end section which is on an opposite side of the ultrasonic linear actuator to the first end section; and
    an adhesive layer which fixes the second end section and the second supporting section to each other, after a position of the second end section of the ultrasonic linear actuator is adjusted with respect to the second supporting section in such a manner that an optical axis of the moving lens group and an element surface of an image pickup element are perpendicular to each other.

2.  The image pickup device according to claim 1,
    wherein the frame is constituted by molded parts having a shape obtained by dividing a box object into two parts on a front side and a rear side in the optical axis direction, and side walls of the box object are formed in a shape which has no through holes,
    a front side frame and a rear side frame are formed by the division into two parts on the front side and the rear side, either one of a front end surface of the front side frame and a rear end surface of the rear side frame is formed with the first fitting section and serves as the first supporting section, and the other of the front end surface and the rear end surface is formed with an adjustment hole on a rear surface side of the second end section so as to expose the second end section and serves as the second supporting section, and
    the adhesive layer is formed and the adjustment hole is sealed by filling adhesive via the adjustment hole.

3.  The image pickup device according to claim 1 or 2, wherein the first fitting section is a through hole, which is sealed by fitting of the front end portion of the rod thereinto.

4.  The image pickup device according to any one of claims 1 to 3, wherein the piezoelectric element has a weight on an end portion thereof on the opposite side from the rod, and the weight is fixed to the second supporting section as the second end portion.

5.  The image pickup device according to any one of claims 1 to 4, wherein the adjustment hole is a hole which is narrower than the second end section.

6.  The image pickup device according to any one of claims 1 to 5, wherein interiors of the front side frame and the rear side frame are formed in a shape having no projecting sections that project in a direction perpendicular to the optical axis direction which is a die separation direction.

7. A method for manufacturing an image pickup device, comprising:

a step in which a first supporting section is provided on one of a front end or a rear end of a frame that accommodates at least an ultrasonic linear actuator in which a rod is connected to one end of a piezoelectric element that expands and contracts in an axial direction, the rod moving reciprocally with expansion and contraction of the piezoelectric element, and a moving lens group which is moved in an optical axis direction by engaging with the rod with a prescribed force; a first end section, which is a front end portion of the rod of the ultrasonic linear actuator, is fitted into a first fitting section provided in the first supporting section; and the first end section is supported in such a manner that the ultrasonic linear actuator can tilt in a prescribed range;
a step in which a second supporting section is provided on the other of the front end or rear end of the frame, in the vicinity of a second end section which is on an opposite side of the ultrasonic linear actuator to the first end section, and a position of the second end section is determined with respect to the second supporting section in such a manner that an optical axis of the moving lens group and an element surface of an image pickup element are perpendicular to each other; and
a step in which adhesive is filled in between the second end section the position of which has been determined and the second supporting section.

8. The method for manufacturing an image pickup device according to claim 7,
wherein the frame is formed with an adjustment hole on a rear surface side of the second end section of the ultrasonic linear actuator so as to expose the second end section, and
in the step in which adhesive is filled, the second end section is bonded to the second supporting section by filling the adhesive into the adjustment hole.

9. The method for manufacturing an image pickup device according to claim 7 or 8,
wherein a reference surface perpendicular to the optical axis of the moving lens group is provided on a holding member which holds the moving lens group, and an installation reference surface serving as a reference for installation of the image pickup element is provided on the frame, and
in the step in which a position of the second end section is determined with respect to the second supporting section, adjustment is performed in such a manner that the reference surface and the installation reference surface are parallel to each other.

10. The method for manufacturing an image pickup device according to claim 8,
wherein an installation reference surface serving as a reference for installation of the image pickup element is provided on the frame,
a lens surface of the moving lens group has a flat portion which is perpendicular to the optical axis, and
in the step in which a position of the second end section is determined with respect to the second supporting section, a tilt of the moving lens group is adjusted by moving the second end section of the ultrasonic linear actuator from the adjustment hole in such a manner that reflected light from a surface parallel to the installation reference surface and reflected light from the flat portion are parallel to each other according to an autocollimator.

11. The method for manufacturing an image pickup device according to claim 8,
further comprising a step of installing the image pickup element on the frame,
wherein, in the step in which a position of the second end section is determined with respect to the second supporting section, a captured image from the image pickup element is monitored, and a tilt of the moving lens group is adjusted by moving the second end section of the ultrasonic linear actuator from the adjustment hole in such a manner that an image quality of the captured image becomes optimum.

12. The method for manufacturing an image pickup device according to any one of claims 8 to 11,
wherein a weight is provided on another end of the piezoelectric element, and
in the step in which adhesive is filled, the adhesive is filled into the adjustment hole and the weight is bonded to the second supporting section.

13. The method for manufacturing an image pickup device according to claim 12,
wherein the weight is formed to have a larger diameter than the piezoelectric element,
the adjustment hole is formed to be narrower than a rear surface of the weight, and
in the step in which adhesive is filled, the weight and the second supporting section are bonded to each other by filling adhesive in between the weight and the second supporting section at a peripheral edge of the adjustment hole.

14. An adjusting jig for an image pickup device, being the image pickup device described in any one of claims 1 to 6, comprising:

    a first jig which abuts against an image pickup element installation reference surface of the frame and grips the frame;
    a second jig which abuts against a reference surface of a holding member which holds the moving lens group, the reference surface being perpendicular to an optical axis of the moving lens group, and which adjusts an angle between the optical axis of the moving lens group and an element surface of the image pickup element to a perpendicular angle by suctioning the moving lens group; and
    an adhesive filling unit having an ejection port in the vicinity of the second end section of the ultrasonic linear actuator.

15. The adjusting jig for an image pickup device according to claim 14, further comprising a positioning member which abuts against the front end portion of the rod of the ultrasonic linear actuator, the abutting portion having a spherical shape.

# FIG.1

# FIG.2

## FIG.3

EP 2 498 112 A1

# FIG.4

25

# FIG.5

FIG.6

# FIG.7

FIG.8B

FIG.8A

FIG.9

FIG.10

FIG.11A

FIG.11B

FIG.11C

FIG.11D

## FIG.12A

523
522
52
521
521a
526

## FIG.12B

52
527
523
521a
522
521a
525
521
521

## FIG.12C

52
526  523  522
521a
525
521
527

## FIG.12D

52
526
525
523
521
522
525
527

EP 2 498 112 A1

# FIG.13

# FIG.14

# FIG.15

FIG.16

97

52'

98

52'

51'

FIG.17B

FIG.17A

# FIG.18

# FIG.19

526

52

4 { 42
41
43

# FIG.20

EP 2 498 112 A1

# FIG.21

# FIG.22

# FIG.23

FIG.24

24'

42

R

30'

# FIG.25

# FIG.26

## FIG.27

304   302a"        42        41

24   243a   243b
243

## FIG.28

305c   305a   305d   42   41

24   243a   243b
243

# FIG.29

52

526b 526a

42

4 { 41

43

## INTERNATIONAL SEARCH REPORT

| International application No. |
|---|
| PCT/JP2010/006244 |

### A. CLASSIFICATION OF SUBJECT MATTER
*G02B7/04*(2006.01)i, *G02B7/02*(2006.01)i, *H04N5/225*(2006.01)i

According to International Patent Classification (IPC) or to both national classification and IPC

### B. FIELDS SEARCHED

Minimum documentation searched (classification system followed by classification symbols)
G02B7/04, G02B7/02, H04N5/225

Documentation searched other than minimum documentation to the extent that such documents are included in the fields searched
Jitsuyo Shinan Koho         1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-025403 A  (Fujinon Corp.),<br>05 February 2009 (05.02.2009),<br>paragraphs [0014] to [0020]; fig. 2<br>& US 2009/0021115 A1 | 1,7,9<br>2,8 |
| Y | JP 2007-053826 A  (Fujinon Corp.),<br>01 March 2007 (01.03.2007),<br>paragraphs [0019] to [0026]; fig. 4<br>& US 2007/0036533 A1 | 1,2,7-9 |
| Y | JP 2009-244353 A  (NEC Corp.),<br>22 October 2009 (22.10.2009),<br>paragraphs [0015] to [0020]; fig. 1<br>(Family: none) | 1,2,7-9 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 February, 2011 (08.02.11) | 15 February, 2011 (15.02.11) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2010/006244 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-084659 A  (Olympus Corp.),<br>31 March 2005 (31.03.2005),<br>paragraph [0037]<br>(Family: none) | 1,2,7-9 |
| Y | JP 2004-077705 A  (Ricoh Co., Ltd.),<br>11 March 2004 (11.03.2004),<br>paragraphs [0043], [0044]<br>(Family: none) | 1,2,7-9 |
| Y | JP 10-232335 A  (Minolta Co., Ltd.),<br>02 September 1998 (02.09.1998),<br>paragraphs [0010], [0011]<br>& US 006091552 A | 1,2,7-9 |
| Y | JP 2010-098902 A  (Konica Minolta<br>Opto, Inc.),<br>30 April 2010 (30.04.2010),<br>paragraph [0053]<br>(Family: none) | 1,2,7-9 |
| Y | JP 2010-051059 A  (Fujinon Corp.),<br>04 March 2010 (04.03.2010),<br>paragraphs [0024] to [0027]; fig. 2<br>(Family: none) | 1,2,7-9 |

Form PCT/ISA/210 (continuation of second sheet) (July 2009)

## INTERNATIONAL SEARCH REPORT

| International application No. |
|---|
| PCT/JP2010/006244 |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:
   The invention in claim 1 cannot be considered to be novel in the light of the invention described in the document 1 cited in this search report which has been partially prepared, and does not have a special technical feature. Therefore, nine inventions (invention groups) each having a special technical feature as indicated below are involved in claims.
   Meanwhile, the invention in claim 1 having no special technical feature is classified into invention 1.
                                        (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1, 2, 7 - 9

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2010/006244

Continuation of Box No.III of continuation of first sheet(2)


(Invention 1) the inventions in claims 1, 2, 7 - 9

(Invention 2) the invention in claim 3

(Invention 3) the invention in claim 4

(Invention 4) the invention in claim 5

(Invention 5) the invention in claim 6

(Invention 6) the invention in claim 10

(Invention 7) the invention in claim 11

(Invention 8) the inventions in claims 12, 13

(Invention 9) the inventions in claims 14, 15

Form PCT/ISA/210 (extra sheet) (July 2009)

**EP 2 498 112 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009025377 A
- JP 2001268951 A
- JP 2009252791 A